# EUROPEAN PATENT SPECIFICATION

(11) **EP 3 859 707 B1**
(45) Date of publication and mention of the grant of the patent: **06.05.2026**
(21) Application number: 19864405.6
(22) Date of filing: 06.08.2019
(51) Int. Cl.: G06V 20/58, G06V 10/44, G08G 1/0962, G06V 10/22, G06V 10/70, G06V 10/80

(54) **ROAD SIGN RECOGNITION DEVICE**
VORRICHTUNG ZUR ERKENNUNG VON STRASSENSCHILDERN
DISPOSITIF DE RECONNAISSANCE DE PANNEAU ROUTIER

(30) Priority: 27.09.2018 JP 2018182971
(43) Date of publication of application: 04.08.2021
(73) Proprietor: Astemo, Ltd., Tokyo 100-0004 (JP)
(72) Inventor: ENDO, Takeshi, Tokyo 100-8280 (JP); NAGASAKI, Takeshi, Hitachinaka-shi, Ibaraki 312-8503 (JP)
(74) Representative: MERH-IP Matias Erny Reichl Hoffmann Patentanwälte PartG mbB
(86) International application number: PCT/JP2019/030824
(87) International publication number: WO 2020/066303

(56) References cited:
- EP-A1- 3 208 740
- JP-A- 2010 191 505
- JP-A- 2010 191 505
- JP-A- 2018 116 553
- JP-A- 2018 116 553

## Description

### Technical Field

The present invention relates to a road sign recognition device.

### Background Art

In order to realize automatic driving and prevent traffic accidents, there is a great deal of interest in road sign recognition techniques that recognize road signs in a traveling vehicle and uses recognition results to control the vehicle.

Some road signs are combinations of main signs indicating various regulation contents on vehicles and auxiliary signs indicating supplementary information on the main signs, such as conditions under which the regulation contents of the main signs are applied. When a vehicle is controlled by recognizing such a road sign in which a main sign and an auxiliary sign are combined in this manner, it is important to determine the validity of a regulation content of the main sign for the vehicle based on the recognition result of the auxiliary sign.

Regarding the recognition of the road sign in which the main sign and the auxiliary sign are combined, for example, PTL 1 discloses a sign recognition device that includes: a sign effective range data recording unit for prestoring effective range conditions shown by a main sign and an auxiliary sign; a sign recognition unit for recognizing a main sign and an auxiliary sign by using a captured image of a roadway in front of a vehicle; and a sign effective range determining unit for determining whether or not the vehicle is staying in an effective range specified with the main sign and the auxiliary sign which have been recognized by the sign recognition unit by using the effective range conditions stored in the sign effective range data recording unit, the vehicle information, and map information. Additionally, PTL 2 discloses a road sign recognition system that uses a combination of image recognition and probability-based analysis, utilizing a database storing main sign-auxiliary sign combination probabilities, another database storing word connection probabilities, and a third database storing word meanings. PTL 3 discloses an image processing system for recognizing traffic signs, particularly combinations of main signs and auxiliary signs. The system uses contrast correction and color analysis to detect circular main signs and rectangular auxiliary signs in vehicle camera images. Overall, PTL 3 determines relationships between detected signs based on their relative positions and validates sign orientations using width-to-height ratios.

### Citation List

### Patent Literature

PTL 1: JP 2010-282278 A
PTL 2: JP 2018 116553 A
PTL 3: EP 3 208 740 A1

### Summary of Invention

### Technical Problem

In the sign recognition device of PTL 1, the road sign needs to be accurately recognized as the premise of correctly determining whether or not the vehicle is staying in the effective range of the road sign. However, the auxiliary sign usually has smaller characters or patterns than the main sign, and is likely to cause misrecognition. Therefore, when the sign recognition device of PTL 1 is used for controlling a vehicle, there is a problem that it is difficult to correctly determine the control content from the recognition result of the road sign.

In view of such a problem, an object of the present invention is to provide a technique for correctly determining the control content of a vehicle from a recognition result of a road sign.

### Solution to Problem

The invention is set out in the appended set of claims. Preferable embodiments are defined in the dependent claims.

### Advantageous Effects of Invention

According to the present invention, the control content of the vehicle can be correctly determined from the recognition result of the road sign.

### Brief Description of Drawings

[FIG. 1] FIG. 1 is a functional block diagram illustrating a configuration of a road sign recognition device according to a first embodiment of the present invention.
[FIG. 2] FIG. 2 is a view illustrating a scene for describing an operation of the road sign recognition device according to the first embodiment of the present invention.
[FIG. 3] FIG. 3 is a flowchart illustrating a processing flow of the road sign recognition device according to the first embodiment of the present invention.
[FIG. 4] FIG. 4 is a view illustrating an example of road sign information according to the first embodiment of the present invention.
[FIG. 5] FIG. 5 is a view illustrating an example of a recognition result of an auxiliary sign according to the first embodiment of the present invention.
[FIG. 6] FIG. 6 is a view illustrating an example of road sign information according to a second embodiment of the present invention.
[FIG. 7] FIG. 7 is a flowchart illustrating a processing flow of a road sign recognition device according to a third embodiment of the present invention.
[FIG. 8] FIG. 8 is a flowchart illustrating a processing flow of a road sign recognition device according to a fourth embodiment of the present invention.
[FIG. 9] FIG. 9 is a view illustrating a scene for describing an operation of a road sign recognition device according to a fifth embodiment of the present invention.
[FIG. 10] FIG. 10 is a flowchart illustrating a processing flow of the road sign recognition device according to the fifth embodiment of the present invention.
[FIG. 11] FIG. 11 is a view illustrating an example of road sign information according to the fifth embodiment of the present invention.
[FIG. 12] FIG. 12 is a functional block diagram illustrating a configuration of a road sign recognition device according to a sixth embodiment of the present invention.
[FIG. 13] FIG. 13 is a view illustrating a scene for describing an operation of the road sign recognition device according to the sixth embodiment of the present invention.
[FIG. 14] FIG. 14 is a flowchart illustrating a processing flow of the road sign recognition device according to the sixth embodiment of the present invention.
[FIG. 15] FIG. 15 is a view illustrating an example of road sign information according to the sixth embodiment of the present invention.
[FIG. 16] FIG. 16 is a view illustrating an example of a recognition result of an auxiliary sign according to the sixth embodiment of the present invention.
[FIG. 17] FIG. 17 is a view illustrating a scene for describing an operation of a road sign recognition device according to a seventh embodiment of the present invention.
[FIG. 18] FIG. 18 is a flowchart illustrating a processing flow of the road sign recognition device according to the seventh embodiment of the present invention.
[FIG. 19] FIG. 19 is a view illustrating an example of road sign information according to the seventh embodiment of the present invention.
[FIG. 20] FIG. 20 is a functional block diagram illustrating a configuration of a road sign recognition device according to an eighth embodiment of the present invention.
[FIG. 21] FIG. 21 is a view illustrating a scene for describing an operation of the road sign recognition device according to the eighth embodiment of the present invention.
[FIG. 22] FIG. 22 is a flowchart illustrating a processing flow of the road sign recognition device according to the eighth embodiment of the present invention.
[FIG. 23] FIG. 23 is a view illustrating an example of road sign information before rewriting according to the eighth embodiment of the present invention.
[FIG. 24] FIG. 24 is a view illustrating an example of a recognition result of an auxiliary sign according to the eighth embodiment of the present invention.
[FIG. 25] FIG. 25 is a view illustrating an example of road sign information after rewriting according to the eighth embodiment of the present invention.

### Description of Embodiments

Hereinafter, embodiments of the present invention will be described in detail.

### [First Embodiment]

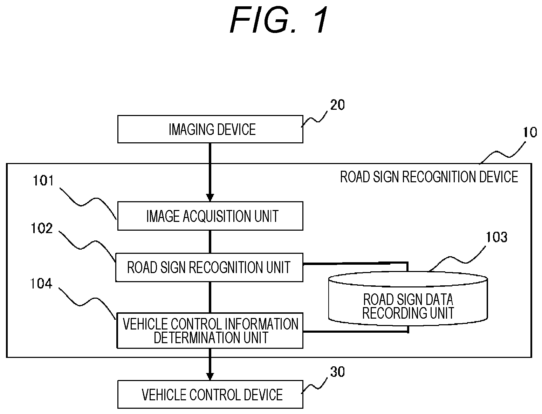

FIG. 1 is a functional block diagram illustrating a configuration of a road sign recognition device according to a first embodiment of the present invention. As illustrated in FIG. 1, a road sign recognition device 10 of the present embodiment is connected to an imaging device 20 and a vehicle control device 30, and includes an image acquisition unit 101, a road sign recognition unit 102, a road sign data recording unit 103, and a vehicle control information determination unit 104. The road sign recognition device 10 is configured using, for example, a computer having an arithmetic device such as a CPU and a storage device such as a ROM, a **RAM,** and a flash memory, and operates as each of the above functional blocks by executing a control program stored in the storage device with the arithmetic device. Note that some or all of functions of the road sign recognition device 10 may be configured using hardware such as an FPGA.

The imaging device 20 is a camera mounted on a vehicle, and captures the surroundings of the vehicle, for example, a scene in front of the vehicle. Hereinafter, the vehicle on which the imaging device 20 is mounted is referred to as a "host vehicle". The imaging device 20 outputs a captured image to the road sign recognition device 10 at a predetermined frame rate, for example. The image output from the imaging device 20 is input to the image acquisition unit 101 in the road sign recognition device 10.

The image acquisition unit 101 controls an operation of the imaging device 20 to acquire the image captured by the imaging device 20 and outputs the image to the road sign recognition unit 102. The image acquisition unit 101 calculates, for example, a camera control value to control the brightness at the time of imaging from an immediately previous image, and instructs the imaging device 20 by the next imaging. The camera control value corresponds to an exposure time of the imaging device 20, an analog gain value, an F-number of a lens, and the like. The image acquisition unit 101 can calculate the camera control value based on, for example, the brightness of a road surface or a sky area in the image.

The road sign recognition unit 102 recognizes a road sign from the image acquired by the image acquisition unit 101, and outputs the recognition result to the vehicle control information determination unit 104. The road sign recognition unit 102 recognizes a road sign in which a main sign and an auxiliary sign are combined. Examples of the main signs to be recognized by the road sign recognition unit 102 include a main sign of a signboard type, a main sign of an electric light display type, a main sign of an internal illumination type illuminated by a backlight, and the like. In addition, examples of the auxiliary sign to be recognized by the road sign recognition unit 102 include an auxiliary sign of a signboard type and an auxiliary sign of an electric light display type. Note that a road sign formed of only the main sign without being combined with any auxiliary sign may be included in a target to be recognized by the road sign recognition unit 102, but a case where the road sign recognition unit 102 recognizes a road sign in which a main sign and an auxiliary sign are combined will be described hereinafter.

When the road sign recognition unit 102 recognizes a road sign from an image, various well-known processing methods can be used. For example, there is a method of identifying a candidate area including a circular object or a rectangular object in an image by performing Hough transform, maximally stable extremal regions (MSER), and the like, and then, performing a recognition process on the identified candidate area. As the recognition process, for example, a template matching process using a template image of a road sign to be recognized can be performed to acquire a type of road sign associated with the template image with the highest correlation can be acquired as a recognition result. In addition, a recognition score for each type of road sign may be acquired by a statistical method using machine learning based on a large number of images obtained by capturing road signs, and the type with the highest score value may be acquired as a recognition result. In addition, it is possible to recognize a road sign from an image using an arbitrary processing method as long as an appropriate recognition result can be obtained.

Here, an auxiliary sign is not installed alone as a road sign, the road sign recognition unit 102 may detect the auxiliary sign after detecting a main sign.

Specifically, a candidate area including a rectangular object may be identified only for a peripheral part of an area recognized as the main sign in an image, and an auxiliary sign recognition process may be performed on the candidate area by a statistical method using a template matching process or machine learning.

Note that when performing a road sign recognition process, the road sign recognition unit 102 may refer to road sign information, which will be described later, stored in the road sign data recording unit 103 to limit a type of road sign to be recognized. Specifically, the number of template images used for template matching can be limited to perform the recognition process.

The road sign data recording unit 103 stores road sign information about various road signs installed on a road on which the host vehicle travels. Examples of the road sign information include information indicating various combinations of main signs and auxiliary signs that can be obtained in road signs, information indicating the frequency of appearance for each combination, information indicating the likelihood of attachment of an auxiliary sign for each main sign, and the like. The road sign information stored in the road sign data recording unit 103 is referred to by the road sign recognition unit 102 and the vehicle control information determination unit 104, and is used in processes performed by these.

The vehicle control information determination unit 104 determines vehicle control information used for controlling the host vehicle based on a road sign recognition result of the road sign recognition unit 102 and the road sign information stored in the road sign data recording unit 103. Specifically, for example, the vehicle control information determination unit 104 identifies a type of an auxiliary sign based on recognition results of a main sign and an auxiliary sign of the road sign recognition unit 102 and the relationship between the main sign and the auxiliary sign represented by the road sign information stored in the road sign data recording unit 103, and determines the vehicle control information according to the type of the auxiliary sign. As a result, it is possible to accurately identify the type of the auxiliary sign and determine the vehicle control information. The vehicle control information determined by the vehicle control information determination unit 104 is output from the road sign recognition device 10 to the vehicle control device 30. Note that details of a method for determining the vehicle control information by the vehicle control information determination unit 104 will be described later.

The vehicle control device 30 performs the control of the host vehicle based on the vehicle control information output from the road sign recognition device 10. For example, a regulation content applied to the host vehicle can be displayed on a display installed in the host vehicle to be presented to a driver, or to control a travel speed of the host vehicle.

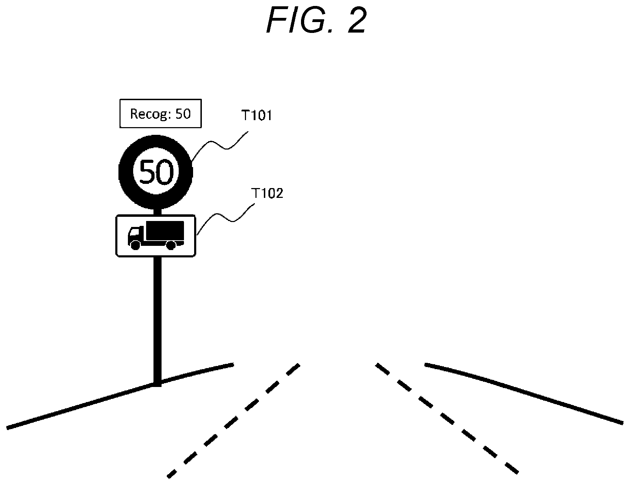

Next, an operation of the road sign recognition device 10 of the present embodiment described above will be described by taking an operation in a scene illustrated in FIG. 2 as an example. FIG. 2 illustrates the scene in which the host vehicle is a truck and a road sign in which a main sign and an auxiliary sign are combined is installed in front of the host vehicle. In FIG. 2, a main sign T101 is a sign indicating that the maximum speed limit is 50 km/h, and an auxiliary sign T102 is a sign indicating that the truck is a regulation target vehicle. Hereinafter, a type of the main sign T101 will be referred to as a "maximum speed 50 km sign", and a type of the auxiliary sign T102 will be referred to as a "truck sign". It can be seen that the maximum speed of the host vehicle, which is the truck, is limited to 50 km/h with the combination of these signs.

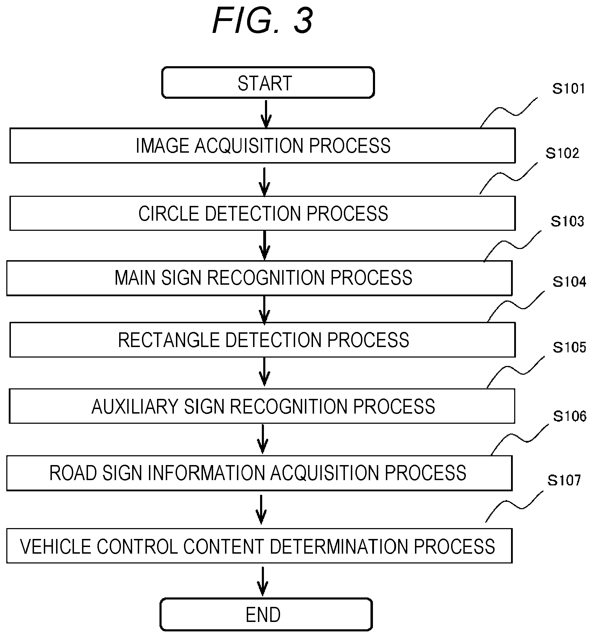

FIG. 3 is a flowchart illustrating a processing flow of the road sign recognition device 10 according to the first embodiment of the present invention. The road sign recognition device 10 of the present embodiment performs the processing illustrated in the flowchart of FIG. 3 every predetermined processing cycle using an arithmetic device, for example, a CPU or the like. Hereinafter, a specific operation example of the road sign recognition device 10 in the scene of FIG. 2 will be described according to the flowchart of FIG. 3.

In Step S101, the image acquisition unit 101 acquires an image obtained by capturing the surroundings of the host vehicle from the imaging device 20. Here, an image including an image of the main sign T101 and an image of the auxiliary sign T102 obtained by capturing the scene illustrated in FIG. 2 by the imaging device 20 is acquired as an image to be processed thereafter.

In Steps S102 to S105, the road sign recognition unit 102 performs a process of recognizing a road sign from the image acquired in Step S101. In this process, a main sign recognition process is first performed in Steps S102 and S103, and then, an auxiliary sign recognition process is performed in Steps S104 and S105.

In Step S102, a circle detection process is performed. In this circle detection process, a circular area corresponding to a shape of a main sign is detected in the image acquired in Step S101, and this area is set as a candidate area for the main sign. As a result, the circular candidate area corresponding to the main sign T101 in FIG. 2 is detected in the image.

In Step S103, the main sign recognition process is performed based on a result of the circle detection process in Step S102. In this main sign recognition process, the above-described recognition process is performed on an image area including the candidate area for the main sign detected in Step S102 to detect a main sign and identify its type. As a result, the main sign T101 of FIG. 2 is detected in the image, and its type is identified as the maximum speed 50 km sign.

In Step S104, a rectangle detection process is performed. In this rectangle detection process, a rectangular area corresponding to a shape of an auxiliary sign is detected in an image area in a periphery of an area where the main sign has been detected in Step S103, for example, an image area in a predetermined range located below the area where the main sign has been detected, and this area is set as a candidate area for the auxiliary sign. As a result, a rectangular candidate area corresponding to the auxiliary sign T102 in FIG. 2 is detected in the image.

In Step S105, the auxiliary sign recognition process is performed based on a result of the rectangle detection process in Step S104. In this auxiliary sign recognition process, the above-described recognition process is performed on an image area including the candidate area for the auxiliary sign detected in Step S104 to detect the auxiliary sign and calculate a recognition score of the auxiliary sign. The recognition score is information indicating the accuracy for each type of the detected auxiliary sign for the image recognition result, that is, the precision of recognition for each type of the auxiliary sign. As a result, the auxiliary sign T102 of FIG. 2 is detected in the image, and the recognition score for each type is calculated. However, the type of the auxiliary sign T102 is not identified at this point in time.

In Step S106, the vehicle control information determination unit 104 acquires road sign information based on the recognition result of Step S103 from the road sign data recording unit 103. In this process, the road sign information corresponding to the type of the main sign identified in Step S103 is read from the road sign information stored in the road sign data recording unit 103.

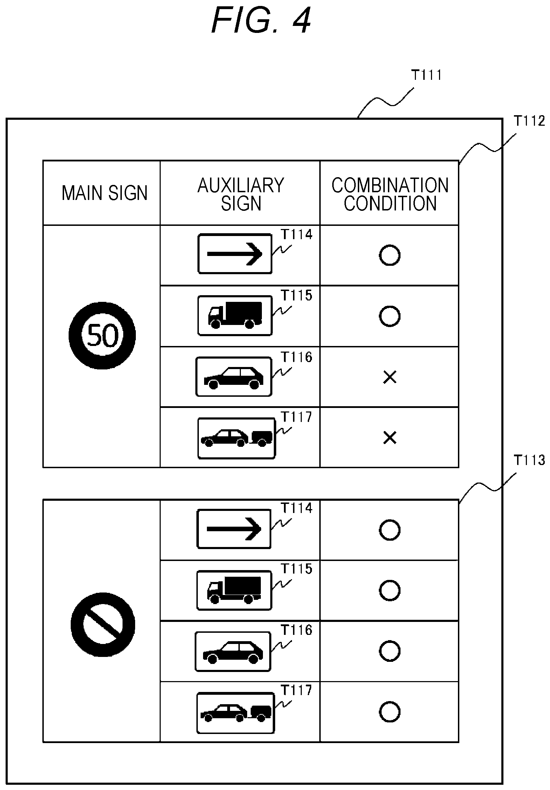

FIG. 4 is a view illustrating an example of road sign information T111 stored in the road sign data recording unit 103 in the first embodiment of the present invention. In the road sign information T111 illustrated in FIG. 4, information indicating a combination of a main sign and an auxiliary sign is described for each type regarding various types of main signs. Specifically, the road sign information T111 in FIG. 4 includes combination information T112 corresponding to the maximum speed 50 km sign and combination information T113 corresponding to a parking prohibition sign. In the rightmost column of these combination information T112 and T113, the possibility of combination for various types of auxiliary signs T114 to T117 is described. Note that the auxiliary sign T114 is a sign indicating a position where a regulation of a main sign starts, and the auxiliary signs T115 to T117 are signs indicating types of regulation target vehicles. Specifically, the auxiliary sign T115, the auxiliary sign T116, and the auxiliary sign T117 indicate that the regulation target vehicles are a truck, a car, and a towing vehicle, respectively. Hereinafter, the type of the auxiliary sign T114, the type of the auxiliary sign T116, and the type of the auxiliary sign T117 will be referred to as a "start sign", a "car sign", and a "towing vehicle sign", respectively.

In the road sign information T111 in FIG. 4, the combination information T112 indicates that the maximum speed 50 km sign is likely to be attached with the start sign and the truck sign, and is not attached with the car sign and the towing vehicle sign. On the other hand, the combination information T113 indicates that the parking prohibition sign is likely to be attached with each of the start sign, the truck sign, the car sign, and the towing vehicle sign.

Note that the road sign information T111 illustrated in FIG. 4 is an example, and a content of the road sign information stored in the road sign data recording unit 103 is not limited thereto. For example, types of main signs and types of auxiliary signs described in the road sign information may be further increased as compared with the example of FIG. 4 and stored in the road sign data recording unit 103.

In the following description, it is assumed that a recognition result that the type of the main sign T101 is the maximum speed 50 km sign is obtained for the scene of FIG. 2 as described above in the main sign recognition process in Step S103. Therefore, in a road sign information acquisition process in Step S106, the vehicle control information determination unit 104 acquires the combination information T112 of the auxiliary sign for the maximum speed 50 km sign from the road sign information T111 stored in the road sign data recording unit 103.

Returning to the description of FIG. 3, the vehicle control information determination unit 104 determines a control content of the host vehicle in Step S107 based on the recognition results of the main sign and the auxiliary sign respectively obtained in Steps S103 and S105 and the road sign information acquired in Step S106. In this process, a type of an auxiliary sign is identified by collating the recognition result of the auxiliary sign obtained in Step S105 with the road sign information acquired in Step S106. Then, a regulation content that applies to the host vehicle is determined based on the identified type of the auxiliary sign and the type of the main sign identified in Step S103, and accordingly, the control content of the host vehicle is determined.

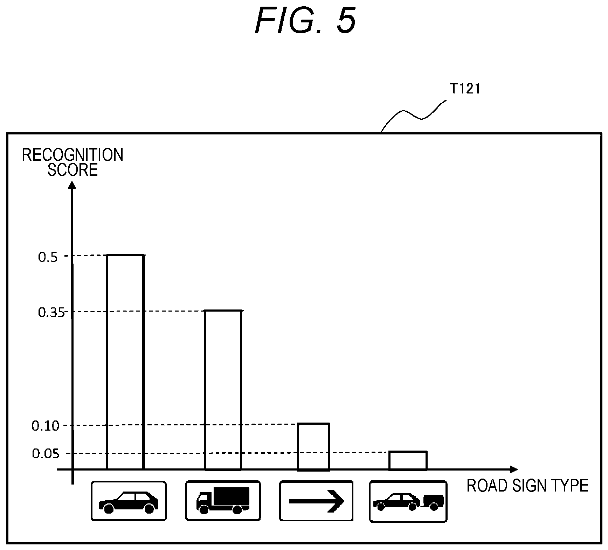

FIG. 5 is a view illustrating an example of a recognition result T121 of the auxiliary sign T102 obtained in Step S105 in the road sign recognition device 10 of the present embodiment. In the recognition result T121 illustrated in FIG. 5, the horizontal axis represents a type of an auxiliary sign, and the vertical axis represents a recognition score for each type. Here, the higher the recognition score is, the higher the accuracy of recognition is. The recognition result T121 of FIG. 5 illustrates that recognition scores, which are higher in the order of the car sign, the truck sign, the start sign, and the towing vehicle sign, are obtained for the auxiliary sign T102. That is, as illustrated in FIG. 2, the recognition score of the car sign is the highest for the auxiliary sign T102 which is actually the truck sign.

In a vehicle control content determination process in Step S107, the vehicle control information determination unit 104 identifies a type of an auxiliary sign having the highest recognition score in the recognition result T121 as the type of the auxiliary sign T102 among types of auxiliary signs that satisfy combination conditions described in the combination information T112 acquired in Step S106. Specifically, the car sign having the highest recognition score in the recognition result T121 of FIG. 5 has a combination condition of "x" in the combination information T112 of FIG. 4, which indicates that the car sign is not attached to the maximum speed 50 km sign. Therefore, it is determined that there is no possibility that the auxiliary sign T102 is the car sign, and the car sign is excluded from the type of the auxiliary sign T102. On the other hand, the truck sign having the second highest recognition score in the recognition result T121 has a combination condition of "o" in the combination information T112 in FIG. 4, which indicates that the truck sign can be attached to the maximum speed 50 km sign. Therefore, the truck sign is identified as the type of the auxiliary sign T102. As a result, a correct recognition result is obtained for the auxiliary sign T102.

When the control content of the host vehicle has been determined in Step S107, the vehicle control information determination unit 104 generates vehicle control information according to the control content and outputs the vehicle control information to the vehicle control device 30. Thereafter, the processing illustrated in the flowchart of FIG. 3 is ended.

As described above, in the road sign recognition device 10 of the present embodiment, the type of the auxiliary sign, which is hardly recognized only by image recognition due to the small pattern or characters, is identified by using the other information such as the combination information with the main sign. Therefore, misrecognition can be reduced and recognition performance can be improved.

In addition, the combination information used when identifying the type of the auxiliary sign is selected from the recognition result of the main sign, which is easily recognized due to the large pattern or characters. Therefore, the optimum combination information can be correctly acquired from the road sign information stored in the road sign data recording unit 103.

According to the first embodiment of the present invention described above, the following operational effects are achieved.
(1) The road sign recognition device 10 includes: the image acquisition unit 101 that acquires an image; the road sign recognition unit 102 that recognizes a road sign from the image acquired by the image acquisition unit 101; the road sign data recording unit 103 that stores the road sign information T111 about a combination of a plurality of road signs; and the vehicle control information determination unit 104 that determines vehicle control information used for controlling the host vehicle. The vehicle control information determination unit 104 determines the vehicle control information based on the road sign recognition result of the road sign recognition unit 102 and the road sign information T111 stored in the road sign data recording unit 103 (Step S107). In this manner, the control content of the host vehicle can be correctly determined from the road sign recognition result.
(2) The road sign information T111 includes the combination information T112 and T113 which are pieces of information about combinations of main signs and auxiliary signs. In this manner, it is possible to reliably identify the auxiliary sign used in combination with the main sign from the recognition result of the main sign and determine the control content of the host vehicle.
(3) The vehicle control information determination unit 104 acquires the combination information T112 corresponding to the main sign T101 from the road sign data recording unit 103 based on the recognition result of the main sign T101 of the road sign recognition unit 102 (Step S106). In Step S107, the type of the auxiliary sign T102 used for determining the vehicle control information is identified based on the combination information T112 acquired in Step S106 and the recognition result of the auxiliary sign T102 of the road sign recognition unit 102 in Step S105. In this manner, even for the auxiliary sign, which is hardly recognized only by image recognition due to the small pattern or characters, the type of the auxiliary sign can be accurately identified and used for determining the vehicle control information.

### [Second Embodiment]

Next, a second embodiment of the present invention will be described. The description has been given in the first embodiment described above regarding the example in which the combination information in the road sign information stored in the road sign data recording unit 103 has two values that represent the possibility of the combination with the auxiliary sign for each type of the main sign. On the other hand, in the second embodiment of the present invention, an example in which combination information in road sign information stored in the road sign data recording unit 103 is expressed as continuous values that represent the frequency of appearance with auxiliary signs for each type of main signs will be described hereinafter.

Note that a configuration of the road sign recognition device 10 according to the present embodiment is the same as that described with reference to FIG. 1 in the first embodiment, the description thereof will be omitted hereinafter. In addition, a processing flow of the road sign recognition device 10 according to the present embodiment is the same as that described with reference to FIG. 3 in the first embodiment, and only a part of a processing content of Step S107 is different. Therefore, a description of a part overlapping with the first embodiment in the processing performed by the road sign recognition device 10 according to the present embodiment will be omitted hereinafter.

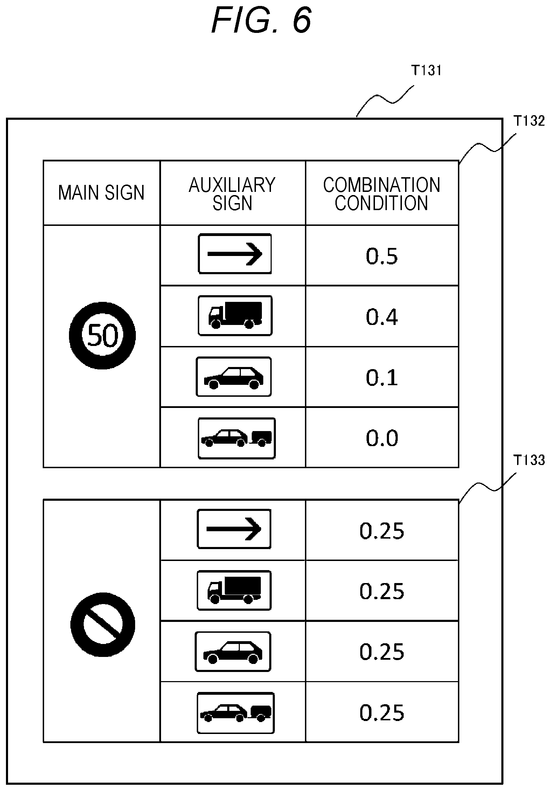

FIG. 6 is a view illustrating an example of road sign information T131 stored in the road sign data recording unit 103 in the second embodiment of the present invention. In combination information T132 and T133 in the road sign information T131 in FIG. 6, the content described in the rightmost column is different as compared with the combination information T112 and T113 in the road sign information T111 of the first embodiment illustrated in FIG. 4. Specifically, in the combination information T132 and T133, not the possibility of the combination for each type of the auxiliary sign as illustrated in FIG. 4 but the frequency of appearance for each type of the auxiliary sign is described in the rightmost column. That is, the larger a value of the frequency of appearance is, the higher the possibility that the auxiliary sign is attached to the corresponding main sign is.

When the road sign information T131 illustrated in FIG. 6 is used, the vehicle control information determination unit 104 acquires the combination information T132 of the auxiliary sign related to the maximum speed 50 km sign from the road sign information T131 in Step S106 of FIG. 3. In the subsequent Step S107, the vehicle control information determination unit 104 calculates a product of a recognition score value in the recognition result T121 of FIG. 5 obtained in Step S105 and a value of the frequency of appearance in the combination information T132 acquired in Step S106 for each type of auxiliary signs. Then, a type of an auxiliary sign having the highest calculated product value is identified as the type of the auxiliary sign T102. Specifically, in the case of a car sign, for example, the recognition score is 0.5, and the frequency of appearance is 0.1. Thus, the value of the product of these is calculated as 0.05. As the same calculation is performed, product values of a truck sign, a start sign, and a towing vehicle sign are calculated as 0.14, 0.05, and 0.00, respectively. Therefore, the truck sign having the highest product value is identified as the type of the auxiliary sign T102. As a result, a correct recognition result is obtained for the auxiliary sign T102.

As described above, the combination information in the road sign information stored in the road sign data recording unit 103 is expressed by continuous values in the road sign recognition device 10 of the present embodiment so that the frequency for each combination of the main sign and auxiliary sign can be set in detail. Therefore, it is possible to identify the type of the auxiliary sign by more deeply reflecting an installation condition of a road sign in the actual environment.

According to the second embodiment of the present invention described above, the following operational effect in (4) is further achieved in addition to the respective operational effects of (1) to (3) described in the first embodiment.

(4) The combination information T132 and T133 include information on the frequency of appearance for each combination of the main sign and the auxiliary sign. In this manner, an auxiliary sign used in combination with a main sign can be more accurately identified from a recognition result of the main sign.

### [Third Embodiment]

Next, a third embodiment of the present invention will be described. In each of the first and second embodiments described above, the description has been given regarding the example in which the type of the auxiliary sign is identified by using the road sign information stored in the road sign data recording unit 103 regardless of the recognition result of the auxiliary sign of the road sign recognition unit 102. On the other hand, in the third embodiment of the present invention, an example of switching whether or not to use road sign information stored in the road sign data recording unit 103 depending on recognition precision of an auxiliary sign of the road sign recognition unit 102 will be described hereinafter.

Note that a configuration of the road sign recognition device 10 according to the present embodiment is the same as that described with reference to FIG. 1 in the first embodiment, the description thereof will be omitted hereinafter.

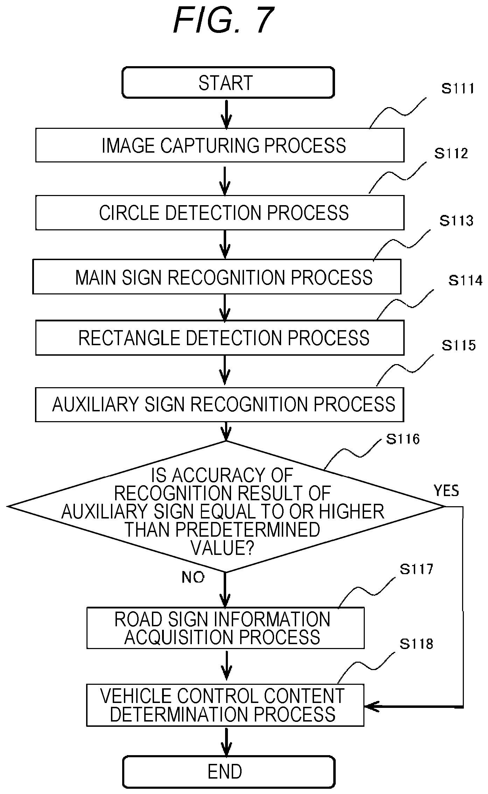

FIG. 7 is a flowchart illustrating a processing flow of the road sign recognition device 10 according to the third embodiment of the present invention. The road sign recognition device 10 of the present embodiment performs the processing illustrated in the flowchart of FIG. 7 every predetermined processing cycle using an arithmetic device, for example, a CPU or the like.

In Steps S111 to S115, the image acquisition unit 101 and the road sign recognition unit 102 perform the same processes as those in Steps S101 to S105 of FIG. 3.

In Step S116, it is determined whether or not the accuracy of a recognition result of an auxiliary sign obtained by the auxiliary sign recognition process of Step S115, that is, the recognition precision of the auxiliary sign is equal to or higher than a predetermined value. As a result, the processing proceeds to Step S117 if the accuracy of the recognition result of the auxiliary sign is lower than the predetermined value.

In this case, the same processes as those in Steps S106 and S107 of FIG. 3 are performed in Steps S117 and S118, respectively.

On the other hand, if it is determined in Step S116 that the accuracy of the recognition result of the auxiliary sign is equal to or higher than the predetermined value, the processing proceeds to Step S118 without performing the process of Step S117. In this case, combination information of an auxiliary sign corresponding to a type of a main sign is not acquired from the road sign data recording unit 103 since the process of Step S117 is not executed. Therefore, in Step S118, the vehicle control information determination unit 104 does not use the combination information stored in the road sign data recording unit 103 and identifies a type of an auxiliary sign based only on a recognition result of the auxiliary sign obtained in Step S115. Then, a regulation content that applies to a host vehicle is determined based on the identified type of the auxiliary sign and the type of the main sign identified in Step S113, and accordingly, a control content of the host vehicle is determined.

Specifically, for example, a case where a threshold for the accuracy of the recognition result of the auxiliary sign used for the determination in Step S116 is 0.6 and a recognition score for any type of the auxiliary sign is 0.9 in the auxiliary sign recognition process in Step S115 is considered. In this case, since an affirmative determination is made in Step S116, the vehicle control information determination unit 104 does not perform the road sign information acquisition process in Step S117, and identifies the type of the auxiliary sign only based on the recognition result of the auxiliary sign obtained in Step S115. That is, a type of a road sign used for vehicle control is identified using only the recognition result of the main sign obtained by the main sign recognition process in Step S113 and the recognition result of the auxiliary sign obtained by the auxiliary sign recognition process in Step S115.

On the other hand, when the highest recognition score in the auxiliary sign recognition process in Step S115 is a value lower than the threshold, for example, 0.3, s negative determination is made in Step S116, and thus, the vehicle control information determination unit 104 performs the road sign information acquisition process in Step S117. Then, the type of the auxiliary sign is identified based on the recognition result of the auxiliary sign obtained in Step S115 and the combination information acquired in Step S117. That is, the type of the road sign to be used for vehicle control is identified by further using combination information in the road sign information stored in the road sign data recording unit 103 in addition to the recognition result of the main sign obtained by the main sign recognition process in Step S113 and the recognition result of the auxiliary sign obtained by the auxiliary sign recognition process in Step S115.

As described above, the type of the road sign used for vehicle control is identified only using the result of image recognition when the accuracy of image recognition for the auxiliary sign is high and it can be determined that the type of the auxiliary sign can be correctly recognized only by image recognition in the road sign recognition device 10 of the present embodiment. Therefore, the road sign information acquisition process for acquiring the combination information about the combination of the main sign and the auxiliary sign can be omitted, and the number of accesses to the road sign data recording unit 103 can be reduced. Therefore, the processing time can be shortened.

According to the third embodiment of the present invention described above, the following operational effect in (5) is further achieved in addition to the respective operational effects of (1) to (4) described in the first and second embodiments.

(5) When the recognition precision of the auxiliary sign of the road sign recognition unit 102 is equal to or higher than the predetermined value (Step S116: YES), the vehicle control information determination unit 104 identifies the type of the auxiliary sign used for determining the vehicle control information without using the combination information stored in the road sign data recording unit 103 (Step S118). In this manner, it is possible to reduce the number of accesses to the road sign data recording unit 103 and shorten the processing time.

### [Fourth Embodiment]

Next, a fourth embodiment of the present invention will be described. In the third embodiment described above, the description has been given regarding the example of switching whether or not to use the road sign information stored in the road sign data recording unit 103 for identifying the type of the auxiliary sign depending on the recognition precision of the auxiliary sign of the road sign recognition unit 102. On the other hand, in the fourth embodiment of the present invention, an example of switching the priority of using road sign information stored in the road sign data recording unit 103 depending on recognition precision of an auxiliary sign of the road sign recognition unit 102 will be described hereinafter.

Note that a configuration of the road sign recognition device 10 according to the present embodiment is the same as that described with reference to FIG. 1 in the first embodiment, the description thereof will be omitted hereinafter.

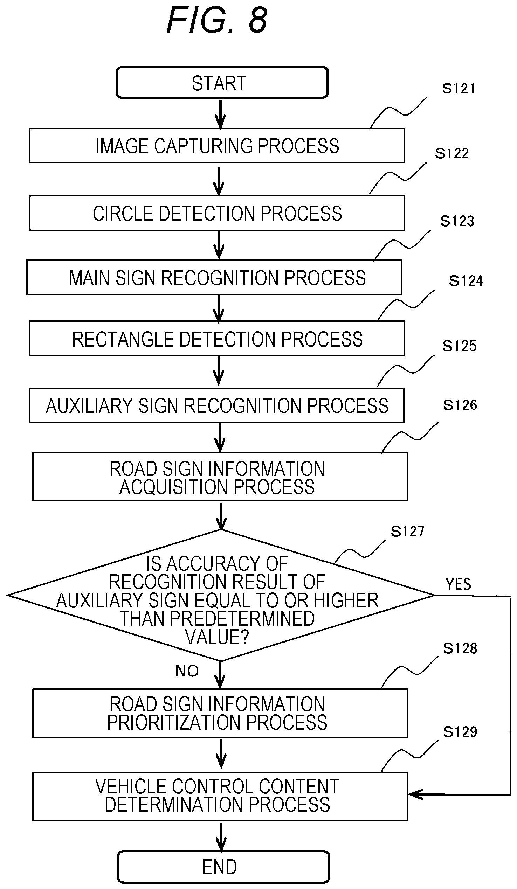

FIG. 8 is a flowchart illustrating a processing flow of the road sign recognition device 10 according to the fourth embodiment of the present invention. The road sign recognition device 10 of the present embodiment performs the processing illustrated in the flowchart of FIG. 8 every predetermined processing cycle using an arithmetic device, for example, a CPU or the like.

In Steps S121 to S126, the image acquisition unit 101, the road sign recognition unit 102, and the vehicle control information determination unit 104 perform the same processes as those in Steps S101 to S106 of FIG. 3.

In Step S127, it is determined whether or not the accuracy of a recognition result of an auxiliary sign obtained by the auxiliary sign recognition process of Step S125, that is, the recognition precision of the auxiliary sign is equal to or higher than a predetermined value. As a result, the processing proceeds to Step S129 if the accuracy of the recognition result of the auxiliary sign is equal to or higher than the predetermined value. In this case, the same process as that in Step S107 of FIG. 3 is performed in Step S129 to identify a type of the auxiliary sign and determine a control content of a host vehicle.

On the other hand, the processing proceeds to Step S128 if it is determined in Step S127 that the accuracy of the recognition result of the auxiliary sign is lower than the predetermined value. In Step S128, the vehicle control information determination unit 104 performs a road sign information prioritization process which is a process for prioritizing the road sign information acquired from the road sign data recording unit 103 in Step S126 over the recognition result of the auxiliary sign. In this process, for example, the combination information for each type of auxiliary signs in the acquired road sign information is amplified to prioritize the road sign information over the recognition result of the auxiliary sign. Specifically, for example, a case where the combination information T132 is read from the road sign data recording unit 103 from the road sign information T131 of FIG. 6 described in the second embodiment is considered. In this case, the combination information T132 can be amplified by adding or multiplying a predetermined value to a value of the frequency of appearance for each type of auxiliary signs described in the combination information T132. Note that a content of the road sign information prioritization process is not limited thereto if the road sign information can be prioritized over the recognition result of the auxiliary sign.

After performing the road sign information prioritization process in Step S128, the vehicle control information determination unit 104 proceeds to Step S129 and performs the process of Step S129 using the amplified combination information. As a result, the type of the auxiliary sign is identified by using the road sign information acquired from the road sign data recording unit 103 in Step S126 with a priority over the recognition result of the auxiliary sign obtained in Step S125. Then, a regulation content that applies to the host vehicle is determined based on the identified type of the auxiliary sign and the type of the main sign identified in Step S123, and accordingly, the control content of the host vehicle is determined.

As described above, in the road sign recognition device 10 of the present embodiment, the type of the road sign used for vehicle control is identified by preferentially using the road sign information about the combination of the main sign and auxiliary sign in a scene where the accuracy of image recognition for the auxiliary sign is low, for example, a case where the auxiliary sign is located in the distance or the like. Therefore, even in a scene where the accuracy of image recognition for the auxiliary sign is low, the auxiliary sign can be recognized with high accuracy and vehicle control can be performed.

Note that the road sign information is acquired from the road sign data recording unit 103 and used to identify the type of the auxiliary sign even when the accuracy of the recognition result of the auxiliary sign is equal to or higher than the predetermined value in the flowchart of FIG. 8. However, as described in the third embodiment, the type of the auxiliary sign may be identified only based on the recognition result of the auxiliary sign obtained in Step S125 without using the road sign information stored in the road sign data recording unit 103 when the accuracy of the recognition result of the auxiliary sign is equal to or higher than the predetermined value. For example, the type of the auxiliary sign can be identified only based on the recognition result of the auxiliary sign by exchanging the order of Steps S126 and S127 in FIG. 8 and not performing the processes of Steps S126 and S128 when it is determined in Step S127 that the accuracy of the recognition result of the auxiliary sign is equal to or higher than the predetermined value. Alternatively, two types of thresholds may be used such that a case where the road sign information is not used, a case where the road sign information acquired from the road sign data recording unit 103 is used as it is, and a case where the acquired road sign information is used with a priority over the recognition result of the auxiliary sign may be used properly in accordance with the accuracy of the recognition result of the auxiliary sign.

According to the fourth embodiment of the present invention described above, the following operational effect in (6) is further achieved in addition to the respective operational effects of (1) to (5) described in the first to third embodiments.

(6) When the recognition precision of the auxiliary sign of the road sign recognition unit 102 is lower than the predetermined value (Step S127: NO), the vehicle control information determination unit 104 identifies the type of the auxiliary sign used for determining the vehicle control information by using the combination information acquired from the road sign data recording unit 103 in Step S126 with a priority over the recognition result of the auxiliary sign of the road sign recognition unit 102 (Step S129). In this manner, the type of the auxiliary sign used for determining the vehicle control information can be accurately identified even when the recognition precision of the auxiliary sign is low.

### [Fifth Embodiment]

Next, a fifth embodiment of the present invention will be described. In the present embodiment, an example of performing auxiliary sign recognition in consideration of the likelihood of attachment of an auxiliary sign with respect to a main sign will be described hereinafter.

Note that a configuration of the road sign recognition device 10 according to the present embodiment is the same as that described with reference to FIG. 1 in the first embodiment, the description thereof will be omitted hereinafter.

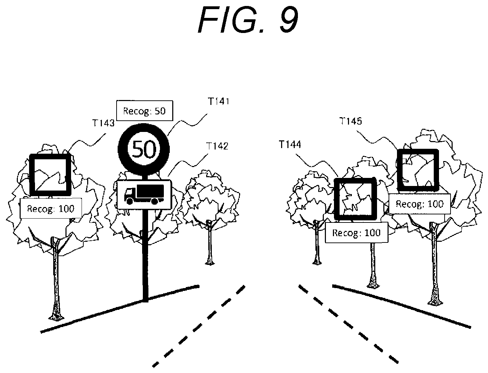

An operation of the road sign recognition device 10 of the present embodiment will be described by taking an operation in a scene illustrated in FIG. 9 as an example. FIG. 9 illustrates a scene in which a host vehicle is a truck, a road sign in which a main sign and an auxiliary sign are combined is installed in front of the host vehicle, and a large number of trees are installed along a road. In FIG. 9, a main sign T141 and an auxiliary sign T142 correspond to a maximum speed 50 km sign and a truck sign, respectively, similarly to the main sign T101 and the auxiliary sign T102 in FIG. 2.

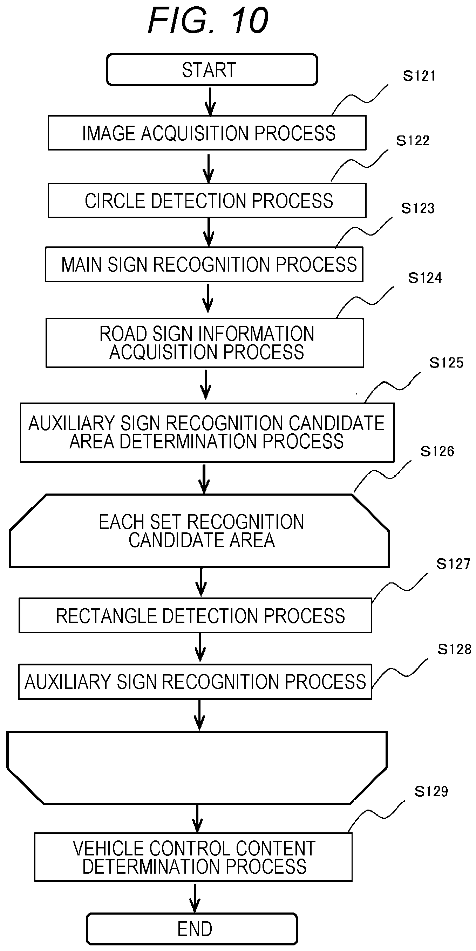

FIG. 10 is a flowchart illustrating a processing flow of the road sign recognition device 10 according to the fifth embodiment of the present invention. The road sign recognition device 10 of the present embodiment performs the processing illustrated in the flowchart of FIG. 10 every predetermined processing cycle using an arithmetic device, for example, a CPU or the like. Hereinafter, a specific operation example of the road sign recognition device 10 in the scene of FIG. 9 will be described according to the flowchart of FIG. 10.

In Step S121, the image acquisition unit 101 acquires an image obtained by capturing the surroundings of the host vehicle from the imaging device 20. Here, an image including an image of the main sign T141 and an image of the auxiliary sign T142 obtained by capturing the scene illustrated in FIG. 9 by the imaging device 20 is acquired as an image to be processed thereafter.

In Steps S122 and S123, the road sign recognition unit 102 performs a process of recognizing a main sign from the image acquired in Step S121. Specifically, in Step S122, a circular area corresponding to a shape of the main sign is detected in the image acquired in Step S121, and a circle detection process is performed using this area as a candidate area for the main sign, which is similar to Step S102 in FIG. 3. In the subsequent Step S123, a main sign recognition process is performed on an image area including the candidate area for the main sign detected by the circle detection process in Step S122 to detect the main sign and identify its type, which is similar to Step S103 in FIG. 3.

Note that the following description will be given assuming that the main sign T141 in FIG. 9 is detected in the image, and its type is identified as the maximum speed 50 km sign, and partial areas T143 to T145 of trees installed along the road are misrecognized as the main sign (hereinafter referred to as the "maximum speed 100 km sign") indicating that a maximum speed limit is 100 km/h in the processes of Steps S122 and S123.

In Step S124, the vehicle control information determination unit 104 acquires road sign information based on the recognition result of Step S123 from the road sign data recording unit 103. In this process, the road sign information corresponding to the type of the main sign identified in Step S123 is read from the road sign information stored in the road sign data recording unit 103.

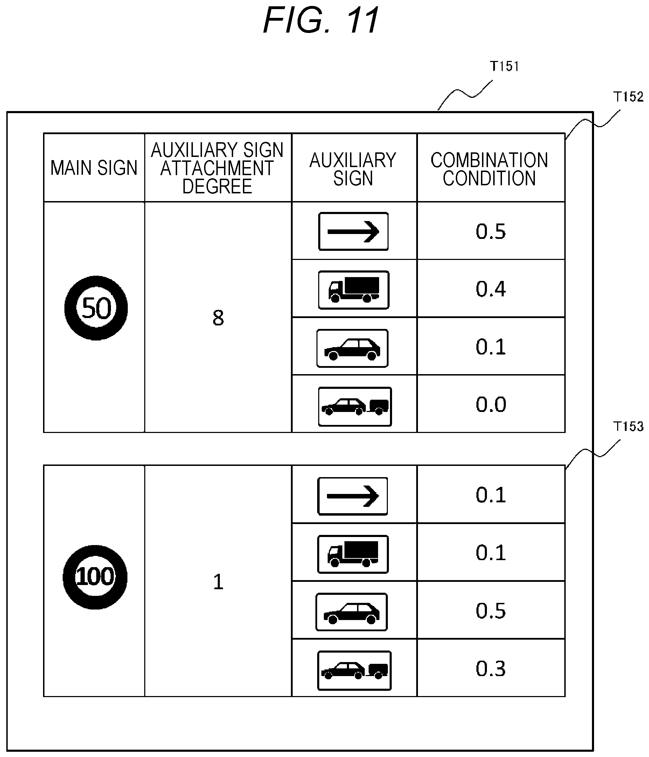

FIG. 11 is a view illustrating an example of road sign information T151 stored in the road sign data recording unit 103 in the fifth embodiment of the present invention. The road sign information T151 illustrated in FIG. 11 includes the combination information T152 corresponding to the maximum speed 50 km sign and the combination information T153 corresponding to the maximum speed 100 km sign, and the frequency of appearance for each type of auxiliary signs is described in the rightmost column in these combination information T152 and T153.

Further, the combination information T152 and T153 also describe the degree of attachment of an auxiliary sign indicating the likelihood of attachment of the auxiliary sign for each of main signs. The higher a value of the degree of attachment of the auxiliary sign is, the higher the possibility that the auxiliary sign is attached is. In the example of FIG. 11, the value of the degree of attachment of the auxiliary sign in the combination information T152 is 8 and the value of the degree of attachment of the auxiliary sign in the combination information T153 is 1, and thus, this indicates that the maximum speed 50 km sign is more likely to be attached with the auxiliary sign than the maximum speed 100 km sign.

In the scene of FIG. 9, as described above, in Step S123, the recognition result that the type of the main sign T141 is the maximum speed 50 km sign is obtained, and the recognition result as the maximum speed 100 km sign is obtained due to misrecognition of the types of the partial areas T143 to T145 of the tree. Therefore, in a road sign information acquisition process in Step S124, the vehicle control information determination unit 104 acquires the combination information T152 of the auxiliary sign for the maximum speed 50 km sign and the combination information T153 of the auxiliary sign for the maximum speed 100 km sign from the road sign information T151 stored in the road sign data recording unit 103.

Returning to the description of FIG. 10, in Step S125, an auxiliary sign recognition candidate area is determined in the image based on the road sign information acquired in Step S124. In this process, a value of the degree of attachment of the auxiliary sign in the combination information of the road sign information acquired in Step S124 is referred to, and main signs are selected within a predetermined upper limit number in order from one with the highest value of the degree of attachment of the auxiliary sign among the plurality of main signs recognized in Step S123. Then, a predetermined image area in a periphery of each of the selected main signs is set as the auxiliary sign recognition candidate area. As a result, the auxiliary sign recognition process is performed in the road sign recognition unit 102 while prioritizing the periphery of the main sign to which the auxiliary sign is highly likely to be attached in the acquired combination information among the plurality of main signs recognized from the image.

Note that the upper limit number of the main signs selected in Step S125 can be determined in advance by referring to, for example, the processing time required for the auxiliary sign recognition process and the processing time assigned to the processing of the flowchart of FIG. 10 and the like. Alternatively, the upper limit number of the selected main signs may be set based on a recognition score at the time of recognizing each main sign, the number of the recognized main signs, and the like.

In the road sign information T151 of FIG. 11, the value of the degree of attachment of the auxiliary sign in the combination information T152 is 8, and the value of the degree of attachment of the auxiliary sign in the combination information T153 is 1 as described above. Here, assuming that the upper limit number of the main signs selected in Step S125 is 1, only the main sign T141 corresponding to the combination information T152 is selected, and the partial areas T143 to T145 of the tree misrecognized as the main signs are not selected, in the scene of FIG. 9. Then, a predetermined area in a periphery of the selected main sign T141, for example, an area in a predetermined range located immediately below the main sign T141 is set as the auxiliary sign recognition candidate area.

In Step S126, the processes of Steps S127 and S128 are performed for each of the recognition candidate areas set in Step S125 to perform the process of recognizing the auxiliary sign. Specifically, in Step S127, a rectangular area corresponding to a shape of the auxiliary sign is detected in each recognition candidate area, and a rectangle detection process is performed using this area as a candidate area for the auxiliary sign.

In the subsequent Step S128, the auxiliary sign recognition process is performed on an image area including the candidate area for the auxiliary sign detected in the rectangle detection process of Step S127 to detect the auxiliary sign and calculate a recognition score of the auxiliary sign. As a result, the auxiliary sign T142 is detected in the image for the auxiliary sign recognition candidate area set in the periphery of the main sign T141 in FIG. 9, and the recognition score for each type is calculated. However, the type of the auxiliary sign T142 is not identified at this point in time.

When the processes of Steps S127 and S128 have been performed for all the recognition candidate areas set in Step S125, the processing proceeds to Step S129. The vehicle control information determination unit 104 determines a control content of the host vehicle in Step S129 based on the recognition results of the main sign and the auxiliary sign respectively obtained in Steps S123 and S128 and the road sign information acquired in Step S124. That is, as in each of the above-described embodiments, the type of the auxiliary sign is identified by collating the recognition result of the auxiliary sign obtained in Step S128 with the road sign information acquired in Step S124. Then, a regulation content that applies to the host vehicle is determined based on the identified type of the auxiliary sign and the type of the main sign identified in Step S123, and accordingly, the control content of the host vehicle is determined.

As described above, the auxiliary sign recognition process can be preferentially performed in the area where the possibility that the auxiliary sign is installed is high in the road sign recognition device 10 of the present embodiment. Therefore, even when a plurality of candidate areas for which the auxiliary sign recognition process needs to be performed from the recognition result of the main sign appear and it is difficult to perform the recognition process for all the candidate areas due to restrictions in the processing time, it is possible to perform the recognition process while prioritizing the area where the auxiliary sign is highly likely to appear and to recognize the auxiliary sign with high precision.

According to the fifth embodiment of the present invention described above, the following operational effect in (7) is further achieved in addition to the respective operational effects of (1) to (6) described in the first to fourth embodiments.

(7) The combination information T152 and T153 include information on the likelihood of attachment of the auxiliary sign for each of the main signs. When the plurality of main signs are recognized from the image, the road sign recognition unit 102 performs the auxiliary sign recognition process while prioritizing the area in the periphery of the main sign T141 to which the auxiliary sign is highly likely to be attached in the combination information T152 and T153 among the plurality of main signs (Steps S125 to S128). In this manner, the auxiliary signs can be recognized with high precision even if the plurality of main signs are erroneously recognized from the image.

### [Sixth Embodiment]

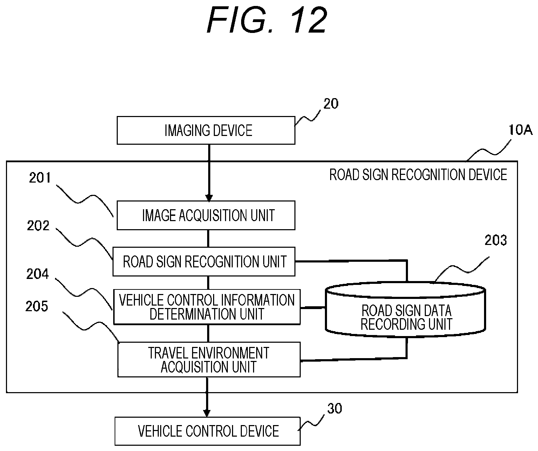

Next, a sixth embodiment of the present invention will be described. FIG. 12 is a functional block diagram illustrating a configuration of a road sign recognition device according to the sixth embodiment of the present invention.

As illustrated in FIG. 12, a road sign recognition device 10A of the present embodiment is connected to the imaging device 20 and the vehicle control device 30, which is similar to the road sign recognition device 10 according to the first embodiment described with reference to FIG. 1. The road sign recognition device 10A of the present embodiment includes an image acquisition unit 201, a road sign recognition unit 202, a road sign data recording unit 203, a vehicle control information determination unit 204, and a travel environment acquisition unit 205. The road sign recognition device 10A is configured using, for example, a computer having an arithmetic device such as a CPU and a storage device such as a ROM, a RAM, and a flash memory, and operates as each of the above functional blocks by executing a control program stored in the storage device with the arithmetic device.

Note that some or all of functions of the road sign recognition device 10A may be configured using hardware such as an FPGA.

The image acquisition unit 201 controls an operation of the imaging device 20 to acquire an image captured by the imaging device 20 and output the image to the road sign recognition unit 202, which is similar to the image acquisition unit 101 of FIG. 1.

The road sign recognition unit 202 recognizes a road sign from the image acquired by the image acquisition unit 201, and outputs the recognition result to the vehicle control information determination unit 204, which is similar to the road sign recognition unit 102 in FIG. 1.

The road sign data recording unit 203 stores road sign information about various road signs installed on a road on which the host vehicle travels. Examples of the road sign information include information indicating various combinations of main signs and auxiliary signs that can be obtained in road signs, information indicating the frequency of appearance for each combination, information indicating the likelihood of attachment of an auxiliary sign for each main sign, and the like as described in each of the first to fifth embodiments. In addition, the road sign information used in the present embodiment includes information on a traveling environment for each road sign. This information represents characteristics of a road where the possibility that a road sign is installed is high for each type of the road sign, and is expressed by a road type, for example, a highway, an urban area, or the like. This information is determined, for example, based on installation standards of road signs for each country or region and the number of installations. Alternatively, road sign information of a plurality of countries or regions may be stored in the road sign data recording unit 203 together with the information on the travel environment for each road sign.

The travel environment acquisition unit 205 acquires travel environment information around a host vehicle. For example, information on a type of a road on which the host vehicle is traveling and a country or region on which the host vehicle is traveling is acquired as the travel environment information around the host vehicle. Then, the acquired travel environment information is output to the vehicle control information determination unit 204. The travel environment acquisition unit 205 is connected to, for example, a car navigation system (not illustrated), and the travel environment information can be acquired from this car navigation system. The car navigation system can identify the travel environment information around the host vehicle by acquiring position information of the host vehicle based on well-known positioning information such as a global positioning system (GPS) signal and referring to map information stored in advance. Alternatively, the travel environment information may be acquired from the outside of the host vehicle by wireless communication.

The vehicle control information determination unit 204 determines vehicle control information used for controlling the host vehicle based on a road sign recognition result of the road sign recognition unit 102, the travel environment information acquired by the travel environment acquisition unit 205, and the road sign information stored in the road sign data recording unit 203.

Specifically, for example, the vehicle control information determination unit 204 identifies road sign information corresponding to the travel environment of the host vehicle from the road sign information stored in the road sign data recording unit 203 based on the travel environment information acquired by the travel environment acquisition unit 205. Then, a type of an auxiliary sign is identified based on recognition results of a main sign and an auxiliary sign of the road sign recognition unit 102 and the relationship between the main sign and the auxiliary sign represented by the road sign information corresponding to the travel environment of the host vehicle, and vehicle control information is determined according to the type of the auxiliary sign, which is similar to the vehicle control information determination unit 104 of FIG. 1. As a result, it is possible to accurately identify the type of the auxiliary sign and determine the vehicle control information in consideration of the traveling environment of the host vehicle. The vehicle control information determined by the vehicle control information determination unit 204 is output from the road sign recognition device 10A to the vehicle control device 30.

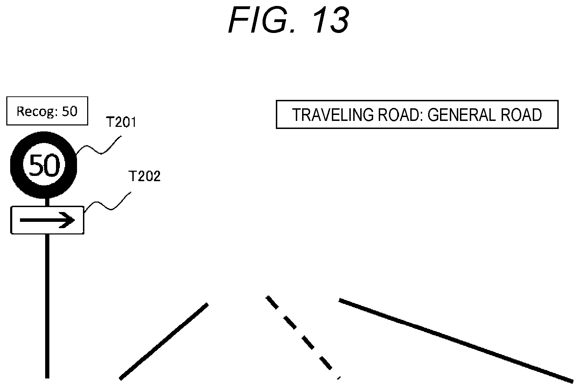

Next, an operation of the road sign recognition device 10A of the present embodiment described above will be described by taking an operation in a scene illustrated in FIG. 13 as an example. FIG. 13 illustrates a scene in which the host vehicle is traveling on a general road and a road sign in which a main sign and an auxiliary sign are combined is installed in front of the host vehicle. In FIG. 13, a main sign T201 is the above-described maximum speed 50 km sign, and an auxiliary sign T202 is the above-described start sign. It can be seen that the combination of these signs limits the maximum speed of the host vehicle to 50 km/h from an installation point of the road sign in which the main sign T201 and the auxiliary sign T202 are combined.

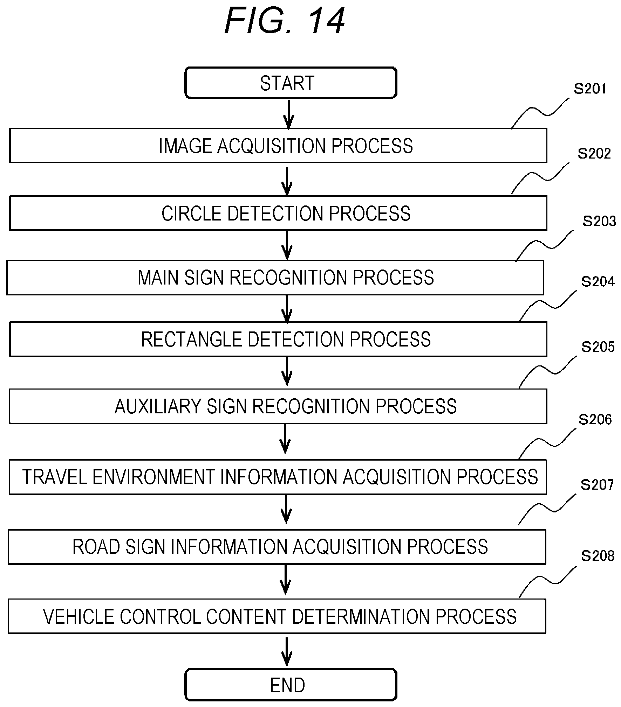

FIG. 14 is a flowchart illustrating a processing flow of the road sign recognition device 10A according to the sixth embodiment of the present invention. The road sign recognition device 10A of the present embodiment performs the processing illustrated in the flowchart of FIG. 14 every predetermined processing cycle using an arithmetic device, for example, a CPU or the like. Hereinafter, a specific operation example of the road sign recognition device 10A in the scene of FIG. 13 will be described according to the flowchart of FIG. 14.

In Step S201, the image acquisition unit 201 acquires an image obtained by capturing the surroundings of the host vehicle from the imaging device 20. Here, an image including an image of the main sign T201 and an image of the auxiliary sign T202 obtained by capturing the scene illustrated in FIG. 13 by the imaging device 20 is acquired as an image to be processed thereafter.

In Steps S202 to S205, the road sign recognition unit 202 performs the same processes as those in Steps S101 to S105 of FIG. 3. As a result, the main sign T201 and the auxiliary sign T202 in FIG. 13 are detected in the image, a type of the main sign T201 is identified as the maximum speed 50 km sign, and a recognition score of the auxiliary sign T202 is calculated for each type.

In Step S206, the travel environment acquisition unit 205 acquires the above-described information corresponding to the position of the host vehicle as the travel environment information around the host vehicle. Here, for example, the information indicating that the type of the road on which the host vehicle is traveling is the general road is acquired as the travel environment information around the host vehicle.

In Step S207, the vehicle control information determination unit 204 acquires road sign information based on the recognition result of Step S203 from the road sign data recording unit 203. In this process, the road sign information corresponding to the type of the main sign identified in Step S203 is read from the road sign information stored in the road sign data recording unit 203.

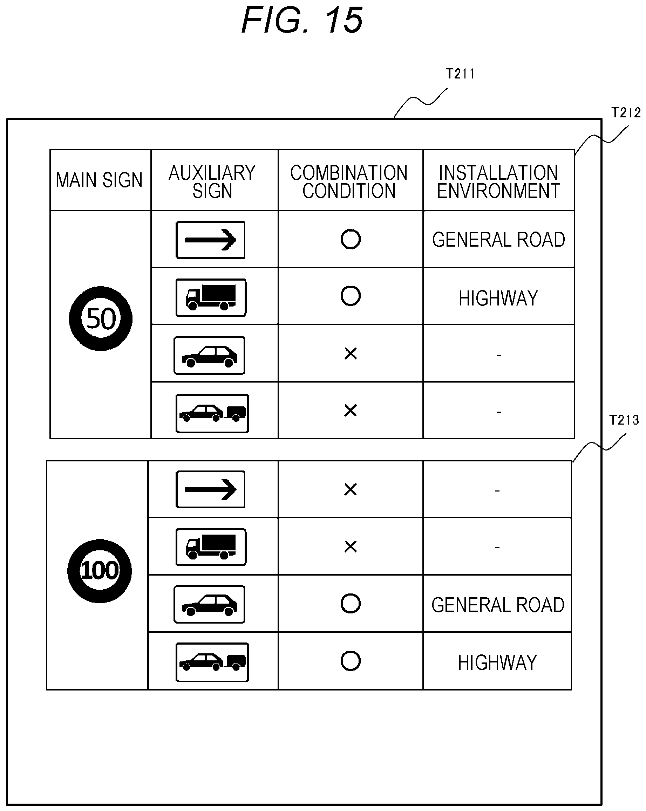

FIG. 15 is a view illustrating an example of road sign information T211 stored in the road sign data recording unit 203 in the sixth embodiment of the present invention. In the road sign information T211 illustrated in FIG. 15 includes combination information T212 corresponding to the maximum speed 50 km sign and combination information T213 corresponding to a maximum speed 100 km sign, and the possibility of the combination for each auxiliary sign is described in these combination information T212 and T213 similarly to FIG. 4.

Further, types of roads on which each auxiliary sign is likely to be installed are also described in the combination information T212 and T213 as an installation environment for each auxiliary sign. In the road sign information T211 in FIG. 15, the combination information T212 indicates that the maximum speed 50 km sign is likely to be attached with the start sign on the general road and attached with a truck sign on the highway, and is not attached with a car sign or a towing vehicle sign. On the other hand, the combination information T213 indicates that the maximum speed 100 km sign is likely to be attached with the car sign on the general road and attached with the towing vehicle sign on the highway, and is not attached with the start sign and the truck sign.

In the following description, it is assumed that a recognition result that the type of the main sign T201 is the maximum speed 50 km sign is obtained for the scene of FIG. 13 as described above in a main sign recognition process in Step S203. Therefore, in a road sign information acquisition process in Step S207, the vehicle control information determination unit 204 acquires the combination information T212 of the auxiliary sign for the maximum speed 50 km sign from the road sign information T211 stored in the road sign data recording unit 203.

Returning to the description of FIG. 14, the vehicle control information determination unit 204 determines a control content of the host vehicle in Step S208 based on the recognition results of the main sign and the auxiliary sign obtained in Steps S203 and S205, respectively, the travel environment information acquired in Step S206, and the road sign information acquired in Step S207. In this process, a type of an auxiliary sign is identified by collating the recognition result of the auxiliary sign obtained in Step S205 and the travel environment information acquired in Step S206 with the road sign information acquired in Step S207. Then, a regulation content that applies to the host vehicle is determined based on the identified type of the auxiliary sign and the type of the main sign identified in Step S203, and accordingly, the control content of the host vehicle is determined.

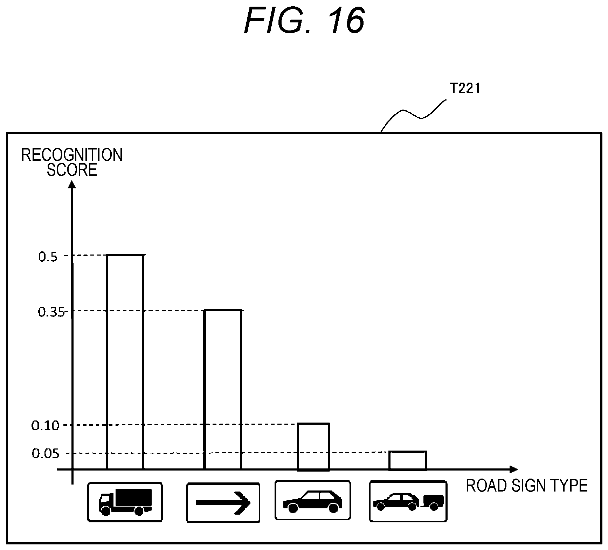

FIG. 16 is a view illustrating an example of a recognition result T221 of the auxiliary sign T202 obtained in Step S205 in the road sign recognition device 10A of the present embodiment. In the recognition result T221 illustrated in FIG. 16, the horizontal axis represents a type of an auxiliary sign, and the vertical axis represents a recognition score for each type. Here, the higher the recognition score is, the higher the accuracy of recognition is. The recognition result T221 of FIG. 16 illustrates that recognition scores, which are higher in the order of the truck sign, the start sign, the car sign, and the towing vehicle sign, are obtained for the auxiliary sign T202. That is, as illustrated in FIG. 13, the recognition score of the truck sign is the highest for the auxiliary sign T202 which is actually the start sign.

In a vehicle control content determination process of Step S208, the vehicle control information determination unit 204 identifies a combination condition corresponding to the travel environment of the host vehicle from the combination information T212 acquired in Step S207 based on the travel environment information acquired in Step S206, and identifies a type of an auxiliary sign having the highest recognition score in the recognition result T221 as the type of the auxiliary sign T202 from among types of auxiliary signs that satisfy the combination condition. Specifically, the truck sign having the highest recognition score in the recognition result T221 in FIG. 16 has a combination condition of "o" for the highway in the combination information T212 in FIG. 15, which indicates that the truck sign is not attached to the maximum speed 50 km sign on the general road indicated by the acquired travel environment information. Therefore, it is determined that there is no possibility that the auxiliary sign T202 is the truck sign, and the truck sign is excluded from the type of the auxiliary sign T202. On the other hand, the start sign having the second highest recognition score in the recognition result T221 has a combination condition is "o" for the general road in the combination information T212 in FIG. 15, which indicates that the start sign can be attached to the maximum speed 50 km sign on the general road indicated by the acquired travel environment information. Therefore, the start sign is identified as the type of the auxiliary sign T202. As a result, a correct recognition result is obtained for the auxiliary sign T202.

When the control content of the host vehicle has been determined in Step S208, the vehicle control information determination unit 204 generates vehicle control information according to the control content and outputs the vehicle control information to the vehicle control device 30. Thereafter, the processing illustrated in the flowchart of FIG. 14 is ended.

As described above, the type of the road on which the host vehicle is traveling is acquired as the travel environment information, and is used to identify the type of the auxiliary sign in the road sign recognition device 10A of the present embodiment. Therefore, it is possible to identify the type of the auxiliary sign in consideration of the traveling environment of the host vehicle, and the recognition performance can be further improved.

Note that the circle detection process, the main sign recognition process, the rectangle detection process, the auxiliary sign recognition process, the travel environment information acquisition process, and the road sign information acquisition process are sequentially performed in Steps S202 to S207 in the flowchart of FIG. 14. However, the order of execution of these processes may be changed. For example, the processing order may be changed such that the travel environment information acquisition process in Step S206 and the road sign information acquisition process in Step S207 are performed after performing the circle detection process in Step S202 and the main sign recognition process in Step S203, and then, the rectangle detection process in Step S204 and the auxiliary sign recognition process in Step S205 are performed. In this case, it is also possible to identify the type of the auxiliary sign corresponding to the travel environment of the host vehicle from the road sign information acquired in Step S207 based on the travel environment information acquired in Step S206, and use only the identified type of the auxiliary sign as a recognition target in the subsequent rectangle detection process and auxiliary sign recognition process. Specifically, for example, it is assumed that travel environment information representing the highway is acquired in Step S206, and the road sign information acquired in the subsequent Step S207 describes that auxiliary signs that can be installed on the highway are the truck sign and the towing vehicle sign. In this case, only the truck sign and the towing vehicle sign can be used as recognition targets, and image recognition using template images of these can be performed in the auxiliary sign recognition process of Step S205.

With the processing as described above, it is possible to limit types of road signs set as recognition targets in accordance with the traveling environment of the host vehicle. Therefore, the number of template images used at the time of template matching can be reduced, and the type of the road sign can be identified at higher speed.

According to the sixth embodiment of the present invention described above, the following operational effects in (8) and (9) is further achieved in addition to the respective operational effects of (1) to (7) described in the first to fifth embodiments.

(8) The road sign recognition device 10A further includes the travel environment acquisition unit 205 that acquires travel environment information around the host vehicle. The road sign information T211 includes information on the travel environment for each road sign. The vehicle control information determination unit 204 determines the vehicle control information based on the road sign recognition result of the road sign recognition unit 202, the travel environment information acquired by the travel environment acquisition unit 205, and the road sign information T211 stored in the road sign data recording unit 203 (Step S208). In this manner, it is possible to determine the control content of the host vehicle more appropriately from the recognition result of the road sign in consideration of the traveling environment of the host vehicle.

(9) The road sign information T211 includes the combination information T212 and T213 about combinations of main signs and auxiliary signs for each road type. The vehicle control information determination unit 204 acquires the combination information T212 corresponding to the main sign T201 from the road sign data recording unit 203 based on the recognition result of the main sign T201 of the road sign recognition unit 202 (Step S207).

In Step S208, the type of the auxiliary sign T202 used for determining the vehicle control information is identified based on the combination information T212 acquired in Step S207, the recognition result of the auxiliary sign T202 of the road sign recognition unit 202 in Step S205, and the road type represented by the travel environment information acquired by the travel environment acquisition unit 205 in Step S206. In this manner, the type of the auxiliary sign can be accurately identified according to the type of the road on which the host vehicle is traveling and be used for determining the vehicle control information.

### [Seventh Embodiment]

Next, a seventh embodiment of the present invention will be described. In the present embodiment, an example of switching road sign information used when identifying a type of an auxiliary sign in accordance with a country or region in which a host vehicle is traveling will be described hereinafter.

Note that, in the road sign recognition device 10A according to the present embodiment, pieces of road sign information with different contents for each of countries or regions are stored in the road sign data recording unit 203 for a plurality of countries or regions where the host vehicle is likely to travel. That is, in the present embodiment, the road sign information set by reflecting installation conditions and installation situations of road signs, which are different for each of countries or regions, is stored in the road sign data recording unit 203. Points other than this are the same as those described with reference to FIG. 12 in the sixth embodiment, and thus, the description thereof will be omitted hereinafter.

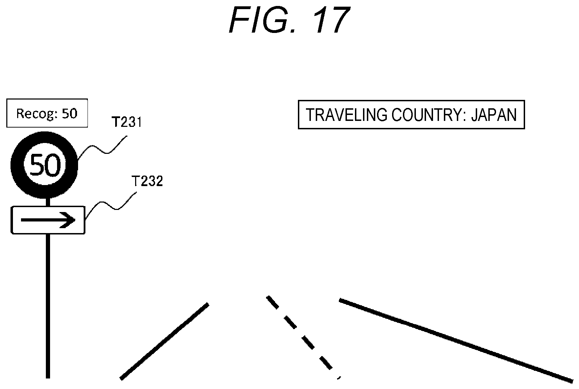

An operation of the road sign recognition device 10A of the present embodiment will be described by taking an operation in a scene illustrated in FIG. 17 as an example. FIG. 17 illustrates a scene in which the host vehicle is traveling in Japan and a road sign in which a main sign and an auxiliary sign are combined is installed in front of the host vehicle. In FIG. 17, a main sign T231 and an auxiliary sign T232 correspond to a maximum speed 50 km sign and a start sign, respectively, similarly to the scene of FIG. 13 described above.

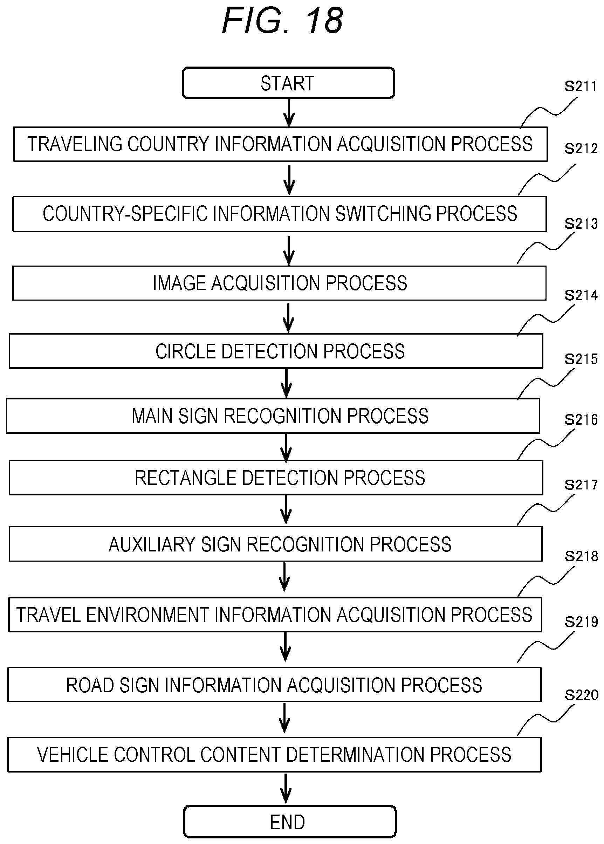

FIG. 18 is a flowchart illustrating a processing flow of the road sign recognition device 10A according to the seventh embodiment of the present invention. The road sign recognition device 10A of the present embodiment performs the processing illustrated in the flowchart of FIG. 18 every predetermined processing cycle using an arithmetic device, for example, a CPU or the like. Hereinafter, a specific operation example of the road sign recognition device 10A in the scene of FIG. 17 will be described according to the flowchart of FIG. 18.

In Step S211, the travel environment acquisition unit 205 acquires traveling country information indicating a country or region where the host vehicle is traveling as travel environment information around the host vehicle. Here, for example, position information of the host vehicle based on a GPS signal and map information registered in advance in a memory of a car navigation system or the road sign recognition device 10A are acquired as the travel environment information, and are collated with each other to identify that the country where the host vehicle is traveling is Japan.

In Step S212, road sign information to be acquired in a road sign information acquisition process performed in Step S219, which will be described later, is switched among pieces of the road sign information stored in the road sign data recording unit 203 based on the traveling country information acquired in Step S211. As a result, among pieces of the road sign information stored in the road sign data recording unit 203 to be classified for each country or region as described above, for example, the road sign information corresponding to Japan is selected as the road sign information used in the subsequent processing.

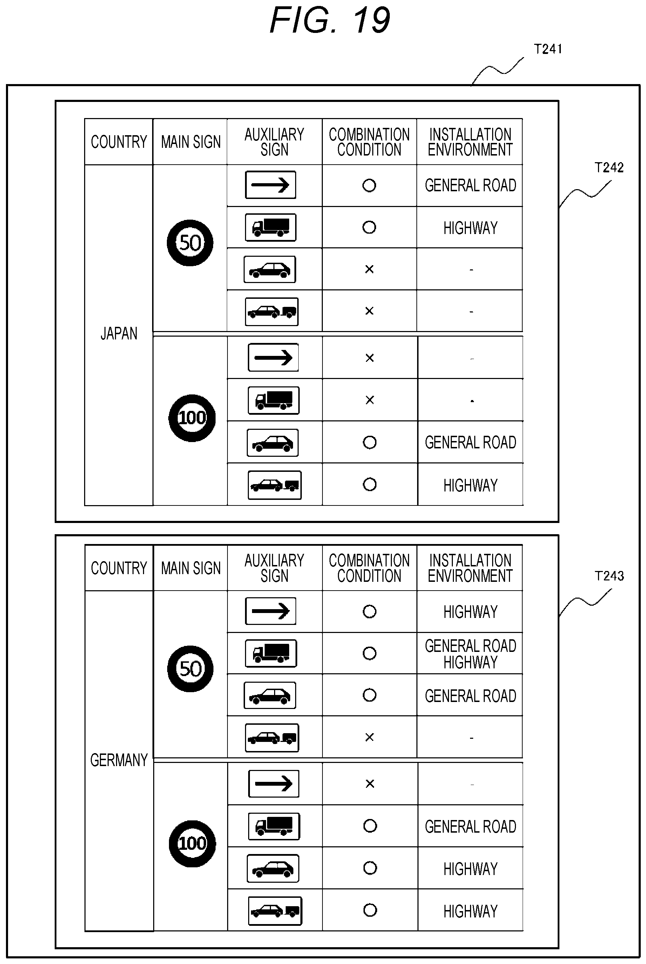

FIG. 19 is a view illustrating an example of road sign information T241 stored in the road sign data recording unit 203 in the seventh embodiment of the present invention. The road sign information T241 illustrated in FIG. 19 includes road sign information T242 in which information about road signs in Japan is described and road sign information T243 in which information about road signs in Germany is described. These pieces of road sign information T242 and T243 include information about various combinations of main signs and auxiliary signs similarly to each of the above-described embodiments.

For the scene of FIG. 17, when the traveling country information indicating that the traveling country of the host vehicle is Japan is obtained in Step S211 as described above, road sign information T242 about Japan is selected from the road sign information T241 stored in the road sign data recording unit 203 as a use target in the subsequent processing in a country-specific information switching process of Step S212.

Returning to the description of FIG. 18, in Steps S213 to S220, the image acquisition unit 201, the road sign recognition unit 202, the vehicle control information determination unit 204, and the travel environment acquisition unit 205 perform the same processes as those in Steps S201 to S208 of FIG. 14. When the control content of the host vehicle has been determined in Step S220, the vehicle control information determination unit 204 generates vehicle control information according to the control content and outputs the vehicle control information to the vehicle control device 30. Thereafter, the processing illustrated in the flowchart of FIG. 18 is ended.

As described above, in the road sign recognition device 10A of the present embodiment, the road sign information classified for each country or region is stored in the road sign data recording unit 203, and the travel environment information to be used is switched in accordance with the traveling country of the host vehicle. Therefore, the type of the road sign can be accurately identified even if the installation conditions and installation situations of road signs are different for each of the countries or regions.

Note that the example of switching the road sign information stored in the road sign data recording unit 203 on a country-by-country basis has been described in the present embodiment, but road sign information may be switched for each region such as Europe and Asia. As a result, the amount of information stored in the road sign data recording unit 203 can be reduced, which leads to reduction of the storage capacity of the memory and the like.

In addition, first, the acquisition of the traveling country information and the country-specific information switching process are performed in Steps S211 and S212, and then, the respective processes of Step S213 and the subsequent steps are sequentially performed in the flowchart of FIG. 18. However, the order of execution of these processes may be changed. For example, the acquisition of the traveling country information and the country-specific information switching process may be performed after performing the main sign recognition process in Step S215 or after performing the auxiliary sign recognition process in Step S217.

As long as the road sign information used in the vehicle control information determination process in Step S220 can be switched in accordance with the country or region where the host vehicle is traveling, the order of execution of the respective processes can be changed arbitrarily.

The example in which the road sign information for the plurality of countries or regions in which the host vehicle is likely to travel is stored in the road sign data recording unit 203 has been described in the present embodiment. However, if a country where the road sign recognition device 10A will be used is determined at a stage of a factory or a production line, a content of the road sign information stored in the road sign data recording unit 203 may be determined at that stage. As a result, the information stored in the road sign data recording unit 203 can be limited to a specific country or region, which leads to the reduction of the storage capacity of the memory or the like.

According to the seventh embodiment of the present invention described above, the following operational effect in (10) is further achieved in addition to the respective operational effects of (1) to (9) described in the first to sixth embodiments.

(10) The road sign data recording unit 203 stores the road sign information for each of the plurality of countries or regions. The vehicle control information determination unit 204 switches the road sign information used for determining the vehicle control information in the process of Step S220 in accordance with the country or region represented by the travel environment information acquired by the travel environment acquisition unit 205 in Step S211. In this manner, it is possible to determine the vehicle control information by using the optimum road sign information in accordance with the country or region where the host vehicle is traveling.

### [Eighth Embodiment]

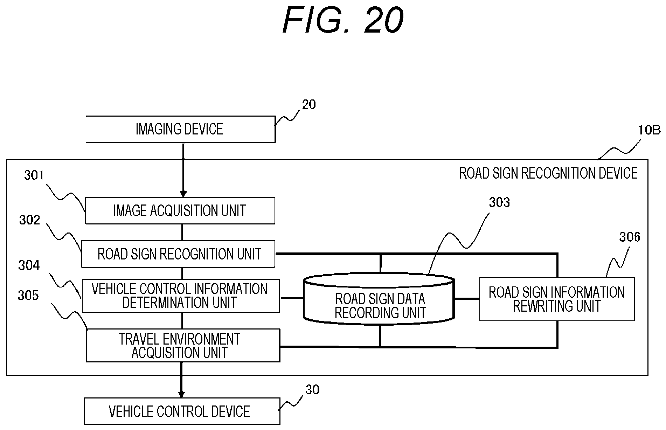

Next, an eighth embodiment of the present invention will be described. FIG. 20 is a functional block diagram illustrating a configuration of a road sign recognition device according to the eighth embodiment of the present invention. As illustrated in FIG. 20, a road sign recognition device 10B of the present embodiment is connected to the imaging device 20 and the vehicle control device 30, which is similar to the road sign recognition devices 10 and 10A described with reference to FIGS. 1 and 12. The road sign recognition device 10B of the present embodiment includes an image acquisition unit 301, a road sign recognition unit 302, a road sign data recording unit 303, a vehicle control information determination unit 304, a travel environment acquisition unit 305, and a road sign information rewriting unit 306. The road sign recognition device 10B is configured using, for example, a computer having an arithmetic device such as a CPU and a storage device such as a ROM, a RAM, and a flash memory, and operates as each of the above functional blocks by executing a control program stored in the storage device with the arithmetic device. Note that some or all of functions of the road sign recognition device 10B may be configured using hardware such as an FPGA.

The image acquisition unit 301 controls an operation of the imaging device 20 to acquire an image captured by the imaging device 20 and output the image to the road sign recognition unit 302, which is similar to the image acquisition unit 101 of FIG. 1 and the image acquisition unit 201 of FIG. 12. The road sign recognition unit 302 recognizes a road sign from the image acquired by the image acquisition unit 301, and outputs the recognition result to the vehicle control information determination unit 304 and the road sign information rewriting unit 306, which is similar to the road sign recognition unit 102 in FIG. 1 and the road sign recognition unit 202 in FIG. 12.

The road sign data recording unit 303 stores road sign information about various road signs installed on a road on which a host vehicle travels. This road sign information includes information indicating various combinations of main signs and auxiliary signs that can be taken in road signs as described in the first embodiment. In addition, various types of information as described in each of the other embodiments can be also included in the road sign information of the present embodiment.

The travel environment acquisition unit 305 acquires a type of a road on which the host vehicle is traveling and information on a country or region where the host vehicle is traveling as travel environment information around the host vehicle, which is similar to the travel environment acquisition unit 205 in FIG. 12. Then, the acquired travel environment information is output to the vehicle control information determination unit 304.

The vehicle control information determination unit 304 determines vehicle control information used for controlling the host vehicle based on a road sign recognition result of the road sign recognition unit 302, the travel environment information acquired by the travel environment acquisition unit 305, and the road sign information stored in the road sign data recording unit 303, which is similar to the vehicle control information determination unit 204 of FIG. 12. The vehicle control information determined by the vehicle control information determination unit 304 is output from the road sign recognition device 10B to the vehicle control device 30.

The road sign information rewriting unit 306 performs the process of rewriting the road sign information stored in the road sign data recording unit 303 based on the road sign recognition result of the road sign recognition unit 302. Specifically, when the recognition result does not match a content described in the road sign information stored in the road sign data recording unit 303 although an extremely high recognition accuracy is obtained for the road sign recognition result of the road sign recognition unit 302, the road sign information is rewritten in accordance with the road sign recognition result. At this time, the road sign information may be rewritten based on the recognition result of the road sign for an image of a single frame output from the imaging device 20. Alternatively, the necessity of rewriting may be determined from recognition results of road signs for images of a plurality of frames and the road sign information may be rewritten according to the determination result.

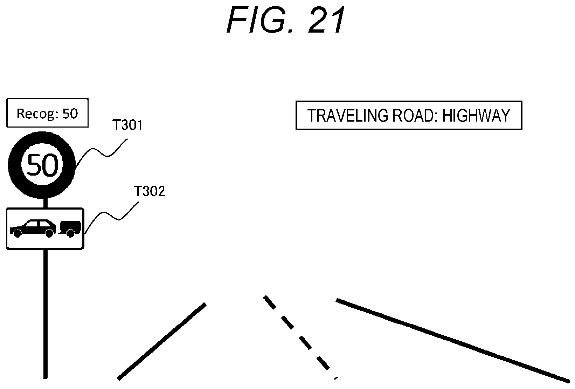

Next, an operation of the road sign recognition device 10B of the present embodiment described above will be described by taking an operation in a scene illustrated in FIG. 21 as an example. FIG. 21 illustrates a scene in which the host vehicle is traveling on a highway and a road sign in which a main sign and an auxiliary sign are combined is installed in front of the host vehicle. In FIG. 21, a main sign T301 is the above-described maximum speed 50 km sign, and an auxiliary sign T302 is the above-described towing vehicle sign. It can be seen that the combination of these signs limits the maximum speed of the towing vehicle to 50 km/h.

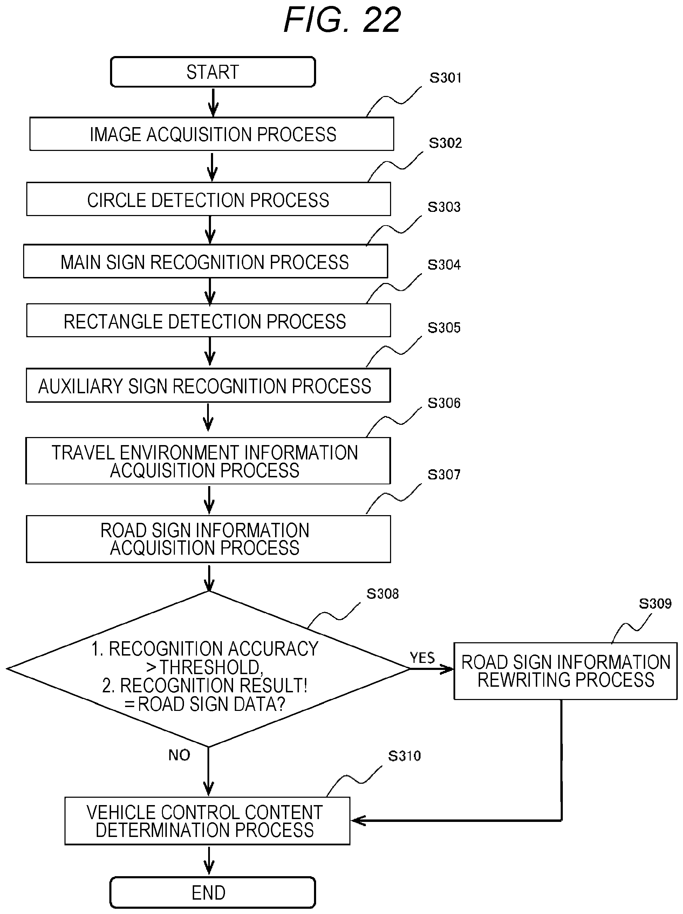

FIG. 22 is a flowchart illustrating a processing flow of the road sign recognition device 10B according to the eighth embodiment of the present invention. The road sign recognition device 10B of the present embodiment performs the processing illustrated in the flowchart of FIG. 22 every predetermined processing cycle using an arithmetic device, for example, a CPU or the like. Hereinafter, a specific operation example of the road sign recognition device 10B in the scene of FIG. 21 will be described according to the flowchart of FIG. 22.

In Step S301, the image acquisition unit 301 acquires an image obtained by capturing the surroundings of the host vehicle from the imaging device 20. Here, an image including an image of the main sign T301 and an image of the auxiliary sign T302 obtained by capturing the scene illustrated in FIG. 21 by the imaging device 20 is acquired as an image to be processed thereafter.

In Steps S302 to S307, the road sign recognition unit 302, the vehicle control information determination unit 304, and the travel environment acquisition unit 305 perform the same processes as those in Steps S202 to S207 of FIG. 14. As a result, the main sign T301 and the auxiliary sign T302 in FIG. 21 are detected in the image, a type of the main sign T301 is identified as the maximum speed 50 km sign, and a recognition score of the auxiliary sign T302 is calculated for each type. In addition, information indicating that the type of the road on which the host vehicle is traveling is the highway is acquired as the travel environment information around the host vehicle. Then, road sign information corresponding to the type of the main sign identified in Step S303 is read by the vehicle control information determination unit 304 from the road sign information stored in the road sign data recording unit 303.

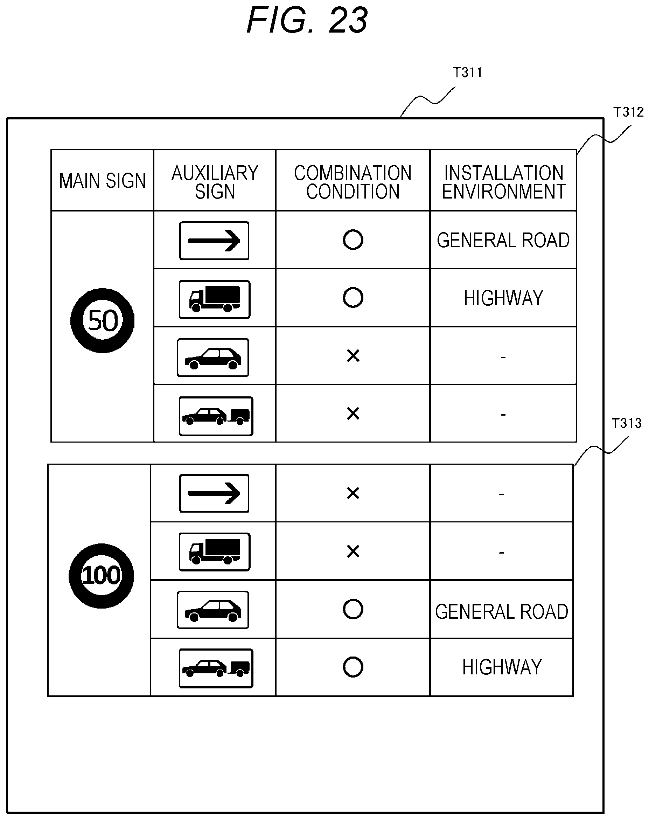

FIG. 23 is a view illustrating an example of road sign information T311 before rewriting stored in the road sign data recording unit 303 in the eighth embodiment of the present invention. The road sign information T311 illustrated in FIG. 23 includes combination information T312 corresponding to the maximum speed 50 km sign and combination information T313 corresponding to a maximum speed 100 km sign, which is similar to the road sign information T211 illustrated in FIG. 15 described above. The possibility of the combination for each auxiliary sign and the type of the road on which each auxiliary sign is likely to be installed are described in these pieces of combination information T312 and T313, respectively.

In the following description, it is assumed that a recognition result that the type of the main sign T301 is the maximum speed 50 km sign is obtained for the scene of FIG. 21 as described above in a main sign recognition process in Step S303. In addition, it is assumed that the information indicating that the type of the road on which the host vehicle is traveling is the highway has been acquired as the travel environment information around the host vehicle as described above in a travel environment information acquisition process in Step S306. Therefore, in a road sign information acquisition process in Step S307, the vehicle control information determination unit 304 acquires the combination information T312 of the auxiliary sign for the maximum speed 50 km sign from the road sign information T311 stored in the road sign data recording unit 303.

Returning to the description of FIG. 22, the road sign information rewriting unit 306 determines whether or not it is necessary to rewrite the road sign information in Step S308 based on the recognition result of the auxiliary sign obtained in Step S305 and the road sign information acquired from the road sign data recording unit 303 by the vehicle control information determination unit 304 in Step S307. Specifically, it is determined if a recognition score for any type is larger than a predetermined threshold (first condition) in the recognition result of the auxiliary sign obtained in Step S305, and whether or not a combined content of a type of the auxiliary sign and a type of a main sign is inconsistent with a content described in the road sign information read in Step S306 (second condition). As a result, if both of these two conditions are satisfied, it is determined that it is necessary to rewrite the road sign information, and the processing proceeds to Step S309. If at least one of the conditions is not satisfied, it is determined that it is unnecessary to rewrite the road sign information, and the processing proceeds to Step S310.

In Step S309, the road sign information rewriting unit 306 rewrites the road sign information stored in the road sign data recording unit 303. Here, a content of the relevant part of the road sign information stored in the road sign data recording unit 303 is rewritten in accordance with the recognition result of the auxiliary sign obtained in Step S305. As a result, when the content of the road sign information stored in the road sign data recording unit 303 does not match the recognition result of the auxiliary sign although the accuracy of the recognition result of the auxiliary sign obtained by image recognition is high, the road sign information is rewritten to the correct content using the recognition result of the auxiliary sign. After the rewriting of the road sign information is ended in Step S309, the processing proceeds to Step S310.

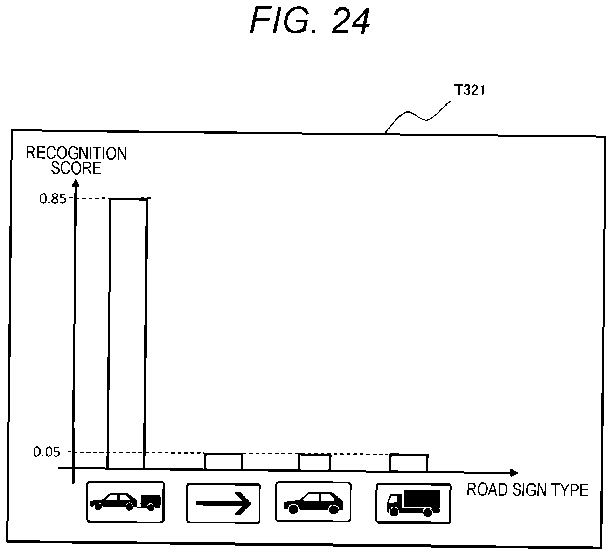

FIG. 24 is a view illustrating an example of a recognition result T321 of the auxiliary sign T302 obtained in Step S305 in the road sign recognition device 10B of the present embodiment. In the recognition result T321 illustrated in FIG. 24, the horizontal axis represents a type of an auxiliary sign, and the vertical axis represents a recognition score for each type. Here, the higher the recognition score is, the higher the accuracy of recognition is. The recognition result T321 of FIG. 24 illustrates that a recognition score for the towing vehicle sign is the highest value of 0.85, and recognition scores for each type of a start sign, a car sign, and a truck sign other than the towing vehicle are all 0.05.

In Step S308, the road sign information rewriting unit 306 compares a value of the recognition score for each type of the auxiliary signs in the recognition result T321 with a predetermined threshold, and determines if the recognition score exceeds the threshold for any type of the auxiliary sign as the determination on the first condition between the above two conditions. For example, when the threshold is set to 0.8, the recognition score of the towing vehicle sign in the recognition result T321 of FIG. 24 is 0.85, which exceeds the threshold. Therefore, it is determined that the recognition result T321 satisfies the first condition.

In addition, in Step S308, the road sign information rewriting unit 306 determines whether or not the content of the recognition result T321 matches the content of the combination information T312 acquired in Step S307 as the determination on the remaining second condition between the above two conditions. For example, when it has been determined in the recognition result T321 that the recognition score of the towing vehicle sign exceeds the threshold as described above, a combination condition of the towing vehicle sign for the maximum speed 50 km sign is "x" in the combination information T312 in FIG. 23, which does not match the recognition result T321. Therefore, it is determined that the recognition result T321 also satisfies the second condition.

If it is determined that both the first condition and the second condition are satisfied as described above, the road sign information rewriting unit 306 rewrites the content of the combination information T312 of the road sign information T311 stored in the road sign data recording unit 303 based on the recognition result T321 in Step S309. As a result, the road sign data recording unit 303 is updated to reflect the recognition result T321.

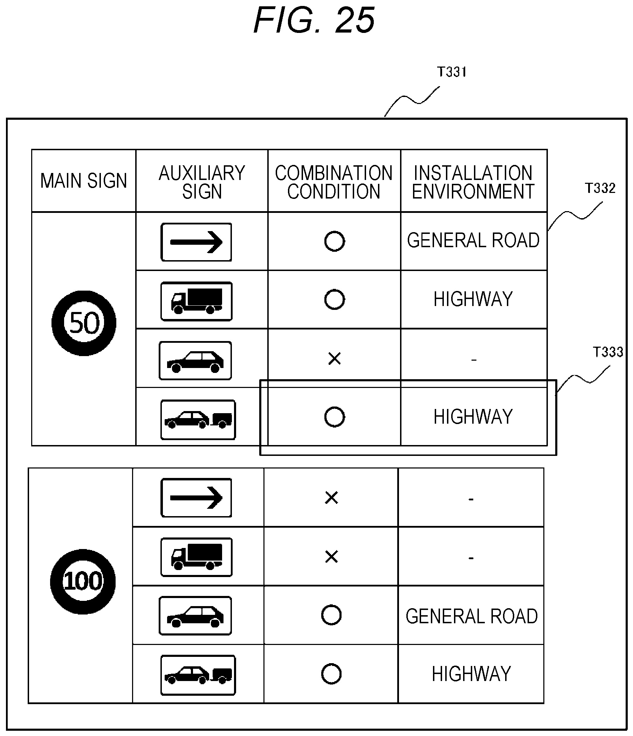

FIG. 25 is a view illustrating an example of road sign information T331 after rewriting stored in the road sign data recording unit 303 in the eighth embodiment of the present invention. In the road sign information T331 illustrated in FIG. 25, a described content of a part T333 indicating a combination condition of a towing vehicle sign in combination information T332 has been rewritten as compared with the road sign information T311 before rewriting illustrated in FIG. 23. Specifically, the combination condition of the towing vehicle sign for the maximum speed 50 km sign is rewritten from "x" to "o", and the possibility that the towing vehicle sign is installed on the highway is described.

Returning to the description of FIG. 22, the vehicle control information determination unit 304 determines a control content of the host vehicle in Step S310 based on the recognition results of the main sign and the auxiliary sign obtained in Steps S303 and S305, respectively, the travel environment information acquired in Step S306, and the road sign information acquired in Step S307. In this process, a type of an auxiliary sign is identified by collating the recognition result of the auxiliary sign obtained in Step S305 and the travel environment information acquired in Step S306 with the road sign information acquired in Step S307, which is similar to Step S208 of FIG. 14. At this time, when the road sign information stored in the road sign data recording unit 303 is rewritten in Step S309, a type of an auxiliary sign is identified using the rewritten road sign information. Then, a regulation content that applies to the host vehicle is determined based on the identified type of the auxiliary sign and the type of the main sign identified in Step S303, and accordingly, the control content of the host vehicle is determined.

When the control content of the host vehicle has been determined in Step S310, the vehicle control information determination unit 304 generates vehicle control information according to the control content and outputs the vehicle control information to the vehicle control device 30. Thereafter, the processing illustrated in the flowchart of FIG. 22 is ended.

As described above, when the accuracy of the obtained road sign recognition result is high, the road sign information stored in the road sign data recording unit 303 is rewritten in the road sign recognition device 10B of the present embodiment. As a result, a road sign can be accurately recognized even if an installation condition of the road sign changes.

Note that the example of rewriting a part of the combination information T312 for the maximum speed 50 km sign in the road sign information T311 stored in the road sign data recording unit 303 has been described in the present embodiment, but another part may be rewritten.

The road sign information rewriting unit 306 can arbitrarily rewrite any information in the road sign information stored in the road sign data recording unit 303.

In addition, the example of determining whether or not it is necessary to rewrite the road sign information stored in the road sign data recording unit 303 based on the recognition result of the road sign for the image of the single frame output from the imaging device 20 has been described in the present embodiment, but the necessity of the road sign information rewriting process may be determined based on recognition results of road signs for images of a plurality of frames obtained in the same scene. Specifically, for example, the first condition in Step S308 of FIG. 22 is replaced with a condition that an average value of recognition scores of road signs in the plurality of frames is equal to or higher than a predetermined value. As a result, it is possible to prevent the road sign information from being erroneously rewritten due to a sudden increase in the recognition score in the single frame.

In addition, the necessity of rewriting the road sign information may be determined based on recognition results of road signs in a plurality of scenes. Specifically, for example, a recognition score obtained for each single scene is stored in a memory, and an average value of the recognition scores among the plurality of scenes is calculated. Then, it is determined whether or not the average value of the recognition scores among the plurality of scenes is equal to or higher than a predetermined value, and it is determined that the above-described first condition is satisfied if the average value is equal to or higher than the predetermined value. As a result, the road sign information can be accurately rewritten, for example, even if sufficient values of recognition scores have not been obtained due to a road sign being shielded by another vehicle or the like in the single scene.

Although the example in which the road sign recognition device 10B includes the travel environment acquisition unit 305 has been described in the present embodiment, the travel environment acquisition unit 305 is not necessarily provided. In such a case, the travel environment information acquisition process in Step S306 can be omitted in the flowchart of FIG. 22. In addition, in the process of Step S310, it is sufficient to determine the control content of the host vehicle based on the recognition results of the main sign and the auxiliary sign obtained in Steps S303 and S305, respectively, and the road sign information acquired in Step S307 without using the travel environment information, which is similar to Step S107 of FIG. 3. Even in this manner, the road sign information rewriting unit 306 can perform the process of rewriting the road sign information stored in the road sign data recording unit 303 based on the road sign recognition result of the road sign recognition unit 302.

According to the eighth embodiment of the present invention described above, the following operational effect in (11) is further achieved in addition to the respective operational effects of (1) to (10) described in the first to seventh embodiments.

(11) The road sign recognition device 10B further includes the road sign information rewriting unit 306 that rewrites the road sign information stored in the road sign data recording unit 303 based on the road sign recognition result of the road sign recognition unit 302. In this manner, the road sign can be correctly updated in accordance with the actual environment and used for recognizing the road sign even if the installation condition of the road sign changes.

Note that the description has been given in each of the first to eighth embodiments described above regarding the example in which the road sign information stored in the road sign data recording units 103, 203, and 303 includes the combination information of the main sign and the auxiliary sign and the type of the auxiliary sign is identified using this combination information, but another information may be included in the road sign information and stored in the road sign data recording units 103, 203, and 303.

For example, information about a combination of a main sign and a main sign, information about a combination of an auxiliary sign and an auxiliary sign, and the like can be stored in the road sign data recording units 103, 203, and 303 as the road sign information. In this manner, even when a plurality of main signs and a plurality of auxiliary signs appear in the same scene, it is possible to accurately identify a type of a road sign used for vehicle control by utilizing the road sign information regarding the these combinations of the plurality of signs stored in the road sign data recording units 103, 203, and 303.

In addition, the road sign recognition device that performs recognition of the road sign has been described in each of the above-described embodiments. In examples which are not according to the invention and are present for illustration purposes only, an object to which the present disclosure is applied is not limited to the road sign recognition device. For example, the present disclosure can be applied to a device that recognizes another object such as a signboard indicating a destination.

The above-described embodiments and modifications are merely examples, and the present invention is not limited to these contents unless the features of the invention are impaired.

### Reference Signs List

10, 10A, 10B road sign recognition device
20 imaging device
30 vehicle control device
101, 201, 301 image acquisition unit
102, 202, 302 road sign recognition unit
103, 203, 303 road sign data recording unit
104, 204, 304 vehicle control information determination unit
205, 305 travel environment acquisition unit
306 road sign information rewriting unit

## Claims

1. A road sign recognition device (10) comprising:
an image acquisition unit (101) that acquires an image;
a road sign recognition unit (102) that recognizes a road sign from the image acquired by the image acquisition unit (101), wherein the road sign recognition unit (102) performs a circle detection process to detect a circular area corresponding to a shape of a main sign in the image and set this area as a candidate area for the main sign, and a main sign recognition process on an image area including the candidate area for the main sign to detect the main sign and identify its type;
a road sign data recording unit (103) that stores road sign information about a combination of a plurality of road signs; and
a vehicle control information determination unit (104) that determines vehicle control information used for controlling a host vehicle,
wherein the vehicle control information determination unit (104) determines the vehicle control information based on a road sign recognition result of the road sign recognition unit (102) and the road sign information stored in the road sign data recording unit (103), wherein
the road sign information includes combination information about a combination of a main sign and an auxiliary sign, and wherein
the combination information includes information about likelihood of attachment of an auxiliary sign for each main sign, and
when a plurality of the main signs are recognized from the image, the road sign recognition unit (102) selects main signs within a predetermined upper limit number in order from one with the highest likelihood of auxiliary sign attachment among the plurality of main signs, and performs an auxiliary sign recognition process on a periphery of each of the selected main signs, wherein the road sign recognition unit (102) performs an auxiliary sign recognition process while prioritizing a periphery of a main sign to which an auxiliary sign is highly likely to be attached in the combination information among the plurality of main signs, wherein the vehicle control information determination unit (104) acquires the combination information corresponding to a main sign from the road sign data recording unit (103) based on a recognition result of the main sign of the road sign recognition unit (102), and identifies a type of an auxiliary sign used for determining the vehicle control information based on the acquired combination information and a recognition result of the auxiliary sign of the road sign recognition unit (102).

2. The road sign recognition device (10) according to claim 1, wherein when recognition precision of an auxiliary sign of the road sign recognition unit (102) is equal to or higher than a predetermined value, the vehicle control information determination unit (104) identifies the type of the auxiliary sign used for determining the vehicle control information without using the combination information stored in the road sign data recording unit (103).

3. The road sign recognition device (10) according to claim 1, wherein when recognition precision of an auxiliary sign of the road sign recognition unit (102) is lower than a predetermined value, the vehicle control information determination unit (104) identifies the type of the auxiliary sign used for determining the vehicle control information by using the combination information acquired from the road sign data recording unit (103) with a priority over the recognition result of the auxiliary sign of the road sign recognition unit (102).

4. The road sign recognition device (10) according to claim 1, further comprising:
a travel environment acquisition unit that acquires travel environment information around the host vehicle,
wherein the road sign information includes information about a travel environment for each road sign, and
the vehicle control information determination unit (104) determines the vehicle control information based on a road sign recognition result of the road sign recognition unit (102), the travel environment information acquired by the travel environment acquisition unit, and the road sign information stored in the road sign data recording unit (103).

5. The road sign recognition device (10) according to claim 4, wherein
the road sign information includes combination information about a combination of a main sign and an auxiliary sign for each road type, and
the vehicle control information determination unit (104) acquires the combination information corresponding to a main sign from the road sign data recording unit (103) based on a recognition result of the main sign of the road sign recognition unit (102), and identifies a type of an auxiliary sign used for determining the vehicle control information based on the acquired combination information, a recognition result of the auxiliary sign of the road sign recognition unit (102), and a road type represented by the travel environment information acquired by the travel environment acquisition unit.

6. The road sign recognition device (10) according to claim 4, wherein
the road sign data recording unit (103) stores the road sign information for each of a plurality of countries or regions, and
the vehicle control information determination unit (104) switches the road sign information used for determining the vehicle control information in accordance with a country or a region represented by the travel environment information acquired by the travel environment acquisition unit.

7. The road sign recognition device (10) according to claim 1, further comprising:
a road sign information rewriting unit that rewrites the road sign information stored in the road sign data recording unit (103) based on the road sign recognition result of the road sign recognition unit (102).

## Patentansprüche

1. Verkehrszeichen-Erkennungsvorrichtung (10), die Folgendes umfasst:
eine Bilderfassungseinheit (101), die ein Bild erfasst;
eine Verkehrszeichen-Erkennungseinheit (102), die ein Verkehrszeichen aus dem Bild erkennt, das durch die Bilderfassungseinheit (101) erfasst wird, wobei die Verkehrszeichen-Erkennungseinheit (102) einen Kreisdetektionsprozess, um einen kreisförmigen Bereich zu detektieren, der einer Form eines Hauptzeichens in dem Bild entspricht, und diesen Bereich als einen Kandidatenbereich für das Hauptzeichen einzustellen, und einen Hauptzeichen-Erkennungsprozess auf einem Bildbereich, der den Kandidatenbereich für das Hauptzeichen enthält, um das Hauptzeichen zu detektieren und seine Art zu identifizieren, durchführt;
eine Verkehrszeichen-Datenaufzeichnungseinheit (103), die Verkehrszeicheninformationen über eine Kombination mehrerer Verkehrszeichen speichert; und
eine Fahrzeugsteuerinformationen-Bestimmungseinheit (104), die Fahrzeugsteuerinformationen bestimmt, die zum Steuern eines Trägerfahrzeugs verwendet werden,
wobei die Fahrzeugsteuerinformationen-Bestimmungseinheit (104) die Fahrzeugsteuerinformationen auf der Grundlage eines Verkehrszeichen-Erkennungsergebnisses der Verkehrszeichen-Erkennungseinheit (102) und der Verkehrszeicheninformationen, die in der Verkehrszeichen-Datenaufzeichnungseinheit (103) gespeichert sind, bestimmt, wobei
die Verkehrszeicheninformationen Kombinationsinformationen über eine Kombination eines Hauptzeichens und eines Hilfszeichens enthalten, und wobei
die Kombinationsinformationen Informationen über eine Wahrscheinlichkeit der Anbringung eines Hilfszeichens für jedes Hauptzeichen enthalten, und
dann, wenn mehrere der Hauptzeichen aus dem Bild erkannt werden, die Verkehrszeichen-Erkennungseinheit (102) Hauptzeichen in einer vorgegebenen oberen Grenzwertanzahl in der Reihenfolge ausgehend von einem mit der höchsten Wahrscheinlichkeit der Anbringung eines Hilfszeichens aus den mehreren Hauptzeichen auswählt und einen Hilfszeichen-Erkennungsprozess auf einem Umfeld von jedem der ausgewählten Hauptzeichen durchführt, wobei die Verkehrszeichen-Erkennungseinheit (102) einen Hilfszeichen-Erkennungsprozess durchführt, während ein Umfeld eines Hauptzeichens, für das es in den Kombinationsinformationen hochwahrscheinlich ist, dass ein Hilfszeichen angebracht ist, von den mehreren Hauptzeichen priorisiert wird, wobei die Fahrzeugsteuerinformationen-Bestimmungseinheit (104) die Kombinationsinformationen, die einem Hauptzeichen entsprechen, auf der Grundlage eines Erkennungsergebnisses des Hauptzeichens der Verkehrszeichen-Erkennungseinheit (102) von der Verkehrszeichen-Datenaufzeichnungseinheit (103) erfasst und eine Art eines Hilfszeichens, das zum Bestimmen der Fahrzeugsteuerinformationen verwendet wird, auf der Grundlage der erfassten Kombinationsinformationen und eines Erkennungsergebnisses des Hilfszeichens der Verkehrszeichen-Erkennungseinheit (102) identifiziert.

2. Verkehrszeichen-Erkennungsvorrichtung (10) nach Anspruch 1, wobei dann, wenn die Erkennungsgenauigkeit eines Hilfszeichens der Verkehrszeichen-Erkennungseinheit (102) größer oder gleich einem vorgebebenen Wert ist, die Fahrzeugsteuerinformationen-Bestimmungseinheit (104) die Art des Hilfszeichens, das zum Bestimmen der Fahrzeugsteuerinformationen verwendet wird, identifiziert, ohne die Kombinationsinformationen zu verwenden, die in der Verkehrszeichen-Datenaufzeichnungseinheit (103) gespeichert sind.

3. Verkehrszeichen-Erkennungsvorrichtung (10) nach Anspruch 1, wobei dann, wenn die Erkennungsgenauigkeit eines Hilfszeichens der Verkehrszeichen-Erkennungseinheit (102) geringer als ein vorgegebener Wert ist, die Fahrzeugsteuerinformationen-Bestimmungseinheit (104) die Art des Hilfszeichens, das zum Bestimmen der Fahrzeugsteuerinformationen verwendet wird, identifiziert, indem die Kombinationsinformationen, die von der Verkehrszeichen-Datenaufzeichnungseinheit (103) erfasst werden, mit einer Priorität über dem Erkennungsergebnis des Hilfszeichens der Verkehrszeichen-Erkennungseinheit (102) verwendet werden.

4. Verkehrszeichen-Erkennungsvorrichtung (10) nach Anspruch 1, die ferner Folgendes umfasst:
eine Fahrumgebungs-Erfassungseinheit, die Fahrumgebungsinformationen um das Trägerfahrzeug erfasst,
wobei die Verkehrszeicheninformationen Informationen über eine Fahrumgebung für jedes Verkehrszeichen enthalten, und
die Fahrzeugsteuerinformationen-Bestimmungseinheit (104) die Fahrzeugsteuerinformationen auf der Grundlage eines Verkehrszeichen-Erkennungsergebnisses der Verkehrszeichen-Erkennungseinheit (102), der Fahrumgebungsinformationen, die durch die Fahrumgebungs-Erfassungseinheit erfasst werden, und der Verkehrszeicheninformationen, die in der Verkehrszeichen-Datenaufzeichnungseinheit (103) gespeichert sind, bestimmt.

5. Verkehrszeichen-Erkennungsvorrichtung (10) nach Anspruch 4, wobei
die Verkehrszeicheninformationen Kombinationsinformationen über eine Kombination eines Hauptzeichens und eines Hilfszeichens für jede Straßenart enthalten, und
die Fahrzeugsteuerinformationen-Bestimmungseinheit (104) die Kombinationsinformationen, die einem Hauptzeichen entsprechen, auf der Grundlage eines Erkennungsergebnisses des Hauptzeichens der Verkehrszeichen-Erkennungseinheit (102) von der Verkehrszeichen-Datenaufzeichnungseinheit (103) erfasst und eine Art eines Hilfszeichens, das zum Bestimmen der Fahrzeugsteuerinformationen verwendet wird, auf der Grundlage der erfassten Kombinationsinformationen, eines Erkennungsergebnisses des Hilfszeichens der Verkehrszeichen-Erkennungseinheit (102) und einer Straßenart, die durch die Fahrumgebungsinformationen dargestellt wird, die durch die Fahrumgebungs-Erfassungseinheit erfasst werden, identifiziert.

6. Verkehrszeichen-Erkennungsvorrichtung (10) nach Anspruch 4, wobei
die Verkehrszeichen-Datenaufzeichnungseinheit (103) die Verkehrszeicheninformationen für jedes bzw. jede von mehreren Ländern oder Regionen speichert, und
die Fahrzeugsteuerinformationen-Bestimmungseinheit (104) die Verkehrszeicheninformationen, die zum Bestimmen der Fahrzeugsteuerinformationen verwendet werden, in Übereinstimmung mit einem Land oder einer Region, das bzw. die durch die Fahrumgebungsinformationen dargestellt wird, die durch die Fahrumgebungs-Erfassungseinheit erfasst werden, umschaltet.

7. Verkehrszeichen-Erkennungsvorrichtung (10) nach Anspruch 1, die ferner Folgendes umfasst:
eine Verkehrszeichen-Überschreibungseinheit, die die Verkehrszeicheninformationen, die in der Verkehrszeichen-Datenaufzeichnungseinheit (103) gespeichert sind, auf der Grundlage des Verkehrszeichen-Erkennungsergebnisses der Verkehrszeichen-Erkennungseinheit (102) überschreibt.

## Revendications

1. Dispositif de reconnaissance de panneau routier (10) comprenant :
une unité d'acquisition d'image (101) qui acquiert une image ;
une unité de reconnaissance de panneau routier (102) qui reconnaît un panneau routier à partir de l'image acquise par l'unité d'acquisition d'image (101), dans lequel l'unité de reconnaissance de panneau routier (102) effectue un processus de détection circulaire pour détecter une zone circulaire correspondant à une forme d'un panneau principal dans l'image et définit cette zone comme zone candidate pour le panneau principal, et un processus de reconnaissance de panneau principal sur une zone d'image incluant la zone candidate pour le panneau principal pour détecter le panneau principal et identifier le type de celui-ci ;
une unité d'enregistrement de données de panneau routier (103) qui stocke des informations de panneau routier concernant une combinaison d'une pluralité de panneaux routiers ; et
une unité de détermination d'informations de commande de véhicule (104) qui détermine des informations de commande de véhicule utilisées pour commander un véhicule hôte,
dans lequel l'unité de détermination d'informations de commande de véhicule (104) détermine les informations de commande de véhicule sur la base d'un résultat de reconnaissance de panneau routier de l'unité de reconnaissance de panneau routier (102) et des informations de panneau routier stockées dans l'unité d'enregistrement de données de panneau routier (103) ; dans lequel
les informations de panneau routier incluent des informations de combinaison concernant une combinaison d'un panneau principal et d'un panneau auxiliaire, et dans lequel
les informations de combinaison incluent des informations concernant une probabilité d'attache d'un panneau auxiliaire pour chaque panneau principal ; et
quand une pluralité de panneaux principaux sont reconnus à partir de l'image, l'unité de reconnaissance de panneau routier (102) sélectionne des panneaux principaux à l'intérieur d'un nombre limite supérieur prédéterminé dans un ordre à partir de l'un ayant la probabilité d'attache de panneau auxiliaire la plus élevée parmi la pluralité de panneaux principaux, et effectue un processus de reconnaissance de panneau auxiliaire sur une périphérie de chacun des panneaux principaux sélectionnés, dans lequel l'unité de reconnaissance de panneau routier (102) effectue un processus de reconnaissance de panneau auxiliaire tout en priorisant une périphérie d'un panneau principal sur laquelle un panneau auxiliaire a une probabilité élevée d'être attaché dans les informations de combinaison parmi la pluralité de panneaux principaux, dans lequel l'unité de détermination d'informations de commande de véhicule (104) acquiert les informations de combinaison correspondant à un panneau principal à partir de l'unité d'enregistrement de données de panneau routier (103) sur la base d'un résultat de reconnaissance du panneau principal de l'unité de reconnaissance de panneau routier (102), et identifie un type d'un panneau auxiliaire utilisé pour déterminer les informations de commande de véhicule sur la base des informations de combinaison acquises et d'un résultat de reconnaissance du panneau auxiliaire de l'unité de reconnaissance de panneau auxiliaire (102).

2. Dispositif de reconnaissance de panneau routier (10) selon la revendication 1, dans lequel, quand une précision de reconnaissance d'un panneau auxiliaire de l'unité de reconnaissance de panneau routier (102) est égale ou supérieure à une valeur prédéterminée, l'unité de détermination d'informations de commande de véhicule (104) identifie le type du panneau auxiliaire utilisé pour déterminer les informations de commande de véhicule sans utiliser les informations de combinaison stockées dans l'unité d'enregistrement de données de panneau routier (103).

3. Dispositif de reconnaissance de panneau routier (10) selon la revendication 1, dans lequel, quand la précision de reconnaissance d'un panneau auxiliaire de l'unité de reconnaissance de panneau routier (102) est inférieure à une valeur prédéterminée, l'unité de détermination d'informations de commande de véhicule (104) identifie le type du panneau auxiliaire utilisé pour déterminer les informations de commande de véhicule en utilisant les informations de combinaison acquises depuis l'unité d'enregistrement de données à partir de l'unité d'enregistrement de données de panneau routier (103) avec une priorité sur le résultat de reconnaissance du panneau auxiliaire de l'unité de reconnaissance de panneau routier (102).

4. Dispositif de reconnaissance de panneau routier (10) selon la revendication 1, comprenant en outre :
une unité d'acquisition d'environnement de circulation qui acquiert des informations d'environnement de circulation autour du véhicule hôte,
dans lequel les informations de panneau routier incluent des informations concernant un environnement de circulation pour chaque panneau routier, et l'unité de détermination d'informations de commande de véhicule (104) détermine les informations de commande de véhicule sur la base d'un résultat de reconnaissance de panneau routier de l'unité de reconnaissance de panneau routier (102), des informations d'environnement de circulation acquises par l'unité d'acquisition d'environnement de circulation, et des informations de panneau routier stockées dans l'unité enregistrement de données de panneau routier (103).

5. Dispositif de reconnaissance de panneau routier (10) selon la revendication 4, dans lequel
les informations de panneau routier incluent des informations de combinaison concernant une combinaison d'un panneau principal et d'un panneau auxiliaire pour chaque type de route, et
l'unité de détermination d'informations de commande de véhicule (104) acquiert les informations de combinaison correspondant à un panneau principal à partir de l'unité d'enregistrement de données de panneau routier (103) sur la base d'un résultat de reconnaissance du panneau principal de l'unité de reconnaissance de panneau routier (102), et identifie intime d'un panneau auxiliaire utilisé pour déterminer les informations de commande de véhicule sur la base des informations de combinaison acquises, d'un résultat de reconnaissance du panneau auxiliaire de l'unité de reconnaissance de panneau routier (102), et d'un type de route représenté par les informations d'environnement de circulation acquises par l'unité d'acquisition d'environnement de circulation.

6. Dispositif de reconnaissance de panneau routier (10) selon la revendication 4, dans lequel
l'unité d'enregistrement de données de panneau routier (103) stocke les informations de panneau routier pour chacun(e) d'une pluralité de pays ou régions, et
l'unité de détermination d'informations de commande de véhicule (104) commute les informations de panneau routier utilisées pour déterminer les informations de commande de véhicule en accord avec un pays ou une région représentés par les informations d'environnement de circulation acquises par l'unité d'acquisition d'environnement de circulation.

7. Dispositif de reconnaissance de panneau routier (10) selon la revendication 1, comprenant en outre :
une unité de réécriture d'informations de panneau routier qui réécrit les informations de panneau routier stockées dans l'unité d'enregistrement de données de panneau routier (103) sur **la** base du résultat de reconnaissance de panneau routier de l'unité de reconnaissance de panneau routier (102).
